# FASCICULE DE BREVET EUROPEEN

(11) **EP 1 692 148 B1**
(45) Date de publication et mention de la délivrance du brevet: **03.03.2010**
(21) Numéro de dépôt: 04816369.5
(22) Date de dépôt: 10.12.2004
(51) Int. Cl.: C07F 7/18

(54) **PROCEDE DE PREPARATION D'ORGANO ALCOXYDIALKYLSILANE**
VERFAHREN ZUR HERSTELLUNG VON ORGANOALKOXYDIALKYLSILAN
METHOD FOR PRODUCING ORGANO ALCOXYDIALKYLSILANE

(30) Priorité: 12.12.2003 FR 0314579
(43) Date de publication de la demande: 23.08.2006
(73) Titulaire: RHODIA CHIMIE, 92512 Boulogne-Billancourt (FR)
(72) Inventeur: PEVERE, Virginie, F-69008 Lyon (FR); RAMDANI, Kamel, 69420 TUPIN ET SEMONS (FR)
(74) Mandataire: Delenne, Marc
(86) Numéro de dépôt international: PCT/FR2004/003185
(87) Numéro de publication internationale: WO 2005/058922

(56) Documents cités:
- WO-A-02/083782
- WO-A-03/048169
- BELYAKOVA Z V ET AL: "PREPARATION OF ALKOXYSILANES BY ETHERIFICATION OF CHLOROSILANES WITH REMOVAL OF HYDROGEN CHLORIDE BY VAPOR OF THE BOILING SOLVENT" JOURNAL OF APPLIED CHEMISTRY OF THE USSR, PLENUM PUBLISHING CO., NEW YORK, NY, US, vol. 59, 1986, pages 426-427, XP009030497 ISSN: 0021-888X

## Description

La présente invention concerne un procédé de préparation d'organo alcoxydialkylsilane par un procédé amélioré réalisé en présence d'un alcanol sur un oméga-halogénoalkyl dialkylhalogénosilane :

L'invention concerne plus particulièrement la fabrication d'un propyl éthoxydialkylsilane à partir d'un propyl dialkylchlorosilane. Des procédés connus sur cette synthèse utilisent généralement comme réactifs le propyl alkyldichlorosilane et le propyl trichloropropylsilane. Le procédé selon l'invention permet d'utiliser comme réactif le chloropropyl-3 diméthylchlorosilane tout en obtenant le chloropropyl-3 éthoxydiméthylsilane avec de très haut rendements. La réaction chimique est la suivante :

CIMe₂Si-CH₂CH₂CH₂Cl + EtOH → (EtO)Me₂Si-CH₂CH₂CH₂Cl + HCl

L'éthoxylation du chloropropyl-3 diméthylchlorosilane peut être conduite de façon quantitative et sélective en présence d'une base. L'utilisation par exemple d'une base organique de type amine tertiaire (dont la triéthylamine) permet de neutraliser stoechiométriquement l'acide formé. Toutefois, l'utilisation d'une base et l'allongement et la complication du procédé liés à son utilisation et à son élimination finale constitue un désavantage certain. Par ailleurs, en l'absence de base, la réaction conduit à des performances non satisfaisantes dans des conditions classiquement utilisées pour ce type de réaction : coulée d'éthanol sur un pied de chloropropyl-3 diméthylchlorosilane. Il s'agit d'un procédé en réacteur batch qui donne d'excellents résultats seulement si la matière première est le chloropropyl-3 méthyldichlorosilane ou le chloropropyl-3 trichlorosilane : taux de transformation (TT) = 100 % (en mole) et sélectivité (RT) > 95 % (en mole).

En effet, la spécificité du groupement diméthylchlorosilyle, comparée par exemple au groupement méthyldichlorosilyle ou trichlorosilyle, conduit à une réactivité plus faible vis à vis de l'éthanol. En effet, cette réaction est équilibrée et l'équilibre est plus difficile à déplacer vers la formation du groupement éthoxydiméthylsilyle dans le cas de l'utilisation du chloropropyl-3 diméthylchlorosilane. Comme cela est démontré dans le brevet WO-A-03/048169, l'obtention du taux de transformation supérieure à 95% nécessite l'emploi d'un excès molaires d'éthanol pour déplacer l'équilibre vers des fortes conversions en assurant le dégagement de l'acide halogéné par la distillation de l'éthanol en excès par rapport à la réaction chimique : sans dégagement de cet acide halogéné, l'équilibre chimique ne permet pas de dépasser un TT de 80 % avec un excès molaire d'éthanol correspondant à un rapport nombre de moles d'éthanol / nombre de moles de chloropropyl-3 diméthylchlorosilane supérieur à 5. Cette difficulté provient des propriétés thermodynamiques du binaire éthanol-acide chlorhydrique qui présente une très forte affinité ; la solubilité de l'HCl dans l'éthanol est comprise entre 50 et 20% massique pour des températures respectivement comprises entre 20 et 60 °C (références de la littérature). Comme indiqué ci-dessus, l'utilisation d'une base anhydre permet de palier à cette difficulté, mais nécessite des étapes de filtration et de régénération de la base qui rendent le procédé complexe. Il est important de noter que l'utilisation d'un excès important d'éthanol, qui contient quelques centaines de ppm d'eau, génère la formation plus importante de produits secondaires. Ces produits secondaires sont issus essentiellement d'une oligomérisation de la fonction silane, réaction consécutive à la réaction :

EtOH + HCl → EtCl + H₂O

2 [ClMe₂Si-CH₂CH₂CH₂Cl] + H₂O → ClCH₂CH₂CH₂-SiMe₂-O-Me₂Si -CH₂CH₂CH₂Cl + HCl

Il a maintenant été trouvé, et c'est ce qui constitue l'objet de la présente invention, qu'il est possible d'améliorer encore davantage les performances, obtenues dans l'art antérieur précité, de la réaction d'alcoolyse conduite en absence de base en jouant notamment sur le choix du solvant, la quantité et le contrôle de l'introduction de l'alcool.

Plus précisément, la présente invention concerne donc un procédé de préparation d'un organo alcoxydialkylsilane de formule :

R¹O---(R²R³)Si-(CH₂)₃--A (III)

+ qui consiste à procéder à une mise en contact d'un alcool de formule :

R¹-OH (I)

avec un silane de formule :

Hal---(R²R³)Si-(CH₂)₃---A (II)

afin de réaliser la réaction d'alcoolyse dudit silane selon la réaction équilibrée suivante : 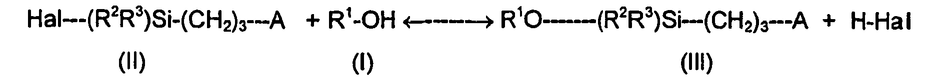 où:
- le symbole Hal représente un atome d'halogène choisi parmi les atomes de chlore, brome et iode, l'atome de chlore étant préféré,
- les symboles R¹, identiques ou différents, représentent chacun un groupe hydrocarboné monovalent choisi parmi un radical alkyle, linéaire ou ramifié, ayant de 1 à 15 atomes de carbone et un radical alcoxyalkyle, linéaire ou ramifié, ayant de 2 à 8 atomes de carbone ;
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ;
- A représente un groupe amovible choisi parmi : soit un atome d'halogène Hal appartenant aux atomes de chlore, brome et iode, l'atome de chlore étant préféré ; soit un radical para-R⁰-C₆H₄-SO₂-O- où R⁰ est un radical alkyle, linéaire ou ramifié en C1-C4, le radical tosylate para-CH₃-C₆H₄-SO₂-O- étant préféré ; soit un radical R⁰-SO₂-O- où R⁰ est tel que défini ci-avant, le radical mésylate CH₃-SO₂-O- étant préféré ; soit un radical R⁰-CO-O- où R⁰ est tel que défini ci-avant, le radical acétate CH₃-CO-O- étant préféré, le radical A le plus préféré étant l'atome de chlore ;

+ en opérant, sous une pression égale à ou différente de la pression atmosphérique, dans un réacteur agité et surmonté d'une colonne de distillation et de son condenseur avec possibilité de reflux ;
+ en réalisant d'une part ladite mise en contact par introduction par coulée de l'alcool de formule (I) dans un mélange silane de formule (II) + phase solvant(s) organique(s), la phase solvant(s) pouvant être engagée au besoin - en partie - en mélange avec l'alcool de formule (I), et d'autre part l'élimination de l'acide halogéné formé de formule H-Hal par entraînement à l'aide de ladite phase solvant(s) organique(s) , et
+ en récupérant l'organo alcoxydialkylsilane de formule (III) formé dans le réacteur par toute méthode appropriée connue de l'homme de métier ;
ledit procédé étant caratérisé par les points suivants :
■ le mélange silane de formule (II) + phase solvant(s) organique(s) est porté à une température qui est celle correspondant à sa température d'ébullition dans les conditions de pression présidant à la réalisation du procédé, et l'alcool commence à être introduit lorsque le condenseur surmontant le réacteur est chargé et est en régime de reflux stationnaire (défini dans ce qui suit par l'expression "régime de reflux initial") ;
■ la phase solvant(s) consiste dans un ou plusieurs solvants organiques qui est (sont) choisi(s) de manière à pouvoir remplir la double fonction : d'une part d'éliminer l'acide halogéné formé par entraînement et relargage du gaz du fait d'une très faible affinité de ladite phase avec l'acide, et d'autre part de présenter un équilibre liquide-vapeur avec l'alcool qui autorise une concentration en alcool de formule (I) dans l'ensemble alcool de formule (I) + phase solvant(s) organique(s) allant de 5 à 30% en poids ;
■ le mode d'introduction de l'alcool de formule (I) suit un protocole opératoire déterminé de manière à éviter, à tout moment lors de l'avancement de la réaction d'alcoolyse du silane de formule (II), une accumulation dans le réacteur de l'acide halogéné de formule H-Hal par solubilisation dans l'alcool de formule (I), de telle sorte que la quantité d'acide halogéné entraînée à l'aide de la phase solvant(s) représente, à tout moment lors de l'avancement de la réaction d'alcoolyse du silane de formule (II), plus de 90 % en poids de l'acide halogéné formé ;
■ la quantité totale d'alcool de formule (I) introduite est telle que le rapport molaire alcool de formule (I) / silane de formule (II) se situe dans l'intervalle allant de 1 à une valeur inférieure à 3 ;
■ la quantité de phase solvant(s) présente dans le réacteur à côté du silane de formule (II) est fonction de la nature de cette phase et elle est déterminée de manière à permettre de limiter en cours d'introduction la concentration en alcool de formule (I) dans l'ensemble alcool de formule (I) + phase solvant(s) organique(s) dans l'intervalle précité allant de 5 à 30% en poids.

En pratique, le (ou les) solvant(s) organique(s) constitutif(s) de la phase solvant(s) qui conviennent sont ceux pris dans le groupe formé notamment par le toluène, le xylène, le chlorobenzène, l'éthylbenzène, l'octane, l'octène, l'hexane, le cyclohexene, le pentane, le pentadiène, le cyclopentadiène, l'heptane, le cycloheptane, et le cyclohexane.

Sans être limité par l'interprétation donnée ci-après, on pense que le rôle de la phase solvant(s) est aussi celui de permettre de limiter la teneur en alcool dans le milieu réactionnel pour minimiser la quantité d'acide halogéné dissous qui bloque la réaction, sans descendre à des concentrations en alcool dans le milieu réactionnel qui serait insuffisante pour déplacer l'équilibre chimique.

Selon une première disposition de mise en oeuvre de la présente invention qui est préférée (DP1), la phase solvant(s) est constituée de solvant(s) dont la température d'ébullition, dans les conditions de pression présidant à la réalisation du procédé, est proche de celle de l'alcool de formule (I). Par le qualificatif "proche", on entend signifier que la différence entre la température d'ébullition de l'alcool et celle du solvant, sous une une pression donnée, n'excède pas une valeur de l'ordre de 30 à 35°C en valeur absolue

Dans le cadre de la première disposition DP1, lorsque le procédé est conduit en utilisant un alcanol de fomule (I) où R¹ est choisi parmi les radicaux méthyle, éthyle, n-propyle et isopropyle, le (ou les) solvant(s) qui convien(nen)t bien (DP1+) est (sont) choisi(s) parmi l'hexane, l'heptane, et le cyclohexane pris seul ou en mélange entre eux et/ou en mélange avec du pentane.

A propos du mode d'introduction de l'alcool de formule (I), on précisera que cette introduction de l'alcool peut être réalisée soit en discontinu (période de coulées puis période de maintiens à reflux total), soit en continu à un débit permettant une adéquation entre la vitesse de sortie de l'acide halogéné et la réaction chimique, ce débit étant décroissant en fonction du temps de la réaction, et ainsi décroissant en fonction de l'avancement de la réaction et à la difficulté croissante à déplacer l'équilibre.

Selon une seconde disposition de mise en oeuvre de la présente invention qui est préférée (DP2), une première variante (VA1) du mode d'introduction de l'alcool de formule (I) fait appel au protocole opératoire discontinu (DP2-VA1) qui se décompose en :
- au moins deux coulées de deux fractions d'alcool, la première fraction d'alcool correspondant à une proportion qui représente 60 à 90 % en mole par rapport à la quantité molaire totale d'alcool utilisé pour atteindre un taux de transformation (TT) du silane de formule (II) au moins égal à 96% (en mole) ;
- au moins deux périodes de reflux sans coulée, chacune d'elles faisant suite à chaque coulée d'alcool effectuée (par l'expression "période de reflux sans coulée", on entend définir une période venant après la fin d'une coulée d'alcool, au cours de laquelle le milieu réactionnel est maintenu sous agitation à une température permettant de conserver pour le moins le régime de reflux initial) ;
- le débit et la durée de la coulée de chaque fraction d'alcool ainsi que la durée de chaque période de reflux sans coulée étant règlés de manière à ce que chaque fraction d'alcool coulée soit consommée lors de la période de reflux sans coulée qui suit ladite coulée.

Une seconde variante (VA2) du mode d'introduction de l'alcool de formule (I) fait appel au protocole opératoire continu (DP2-VA2) qui consiste à réaliser une coulée unique continue d'alcool, mais en utilisant un débit qui décroit avec le degré d'avancement de la réaction d'alcoolyse du silane de formule (II) de manière à ce que la vitesse d'introduction de l'alcool suive (c'est-à-dire soit sensiblement égale à chaque instant à) la vitesse de sa consommation, cette étape de coulée unique pouvant être prolongée par une période de reflux sans coulée de durée variable pour terminer la réaction.

Dans le cadre de la seconde disposition DP2, une première variante du mode d'introduction de l'alcool qui convient bien (DP2-VA1+) se décompose en :
1) une première coulée d'une première fraction d'alcool correspondant à une proportion qui représente 70 à 80 % en mole par rapport à la quantité molaire totale d'alcool utilisé, cette première coulée étant réalisée avec un débit d'alcool se situant dans l'intervalle allant de 0,03 à 0,3 mole d'alcool par minute et par kg de silane de formule (II) et pendant une durée représentant 15 à 25 % de la durée totale nécessaire pour réaliser la consommation de la quantité totale d'alcool introduite selon le schéma réactionnel précité (cette durée totale peut être aisément déterminée par l'homme de métier sur la base d'études de cinétique chimique appropriée ; cette durée est par exemple de l'ordre de 250 à 400 minutes dans le cas de la réaction de l'éthanol sur le chloropropyl-3 diméthylchlorosilane conduite sous la pression atmosphérique à une température allant de 75 à 95°C) ;
2) une première période de reflux sans coulée, réalisée pendant une durée représentant 25 à 35 % de la durée totale nécessaire telle que définie ci-dessus ;
3) une seconde coulée d'une seconde fraction d'alcool correspondant à une proportion qui représente 30 à 20 % en mole par rapport à la quantité molaire totale d'alcool utilisé, cette seconde coulée étant réalisée avec un débit d'alcool se situant dans l'intervalle allant de 0,001 à 0,01 mole d'alcool par minute et par kg de silane et pendant une durée représentant 10 à 20 % de la durée totale nécessaire ; et
4) une seconde période de reflux sans coulée, réalisée pendant une durée représentant 30 à 50 % de la durée totale nécessaire.

Dans le cadre de la seconde disposition DP2, une seconde variante du mode d'introduction de l'alcool qui convient bien (DP2-VA2+) consiste à réaliser la coulée unique avec une décroissance continue de débit conduite selon au moins un palier comme indiqué ci-après :
- cas d'un palier unique où le débit diminue de manière programmée de 0,2 (débit initial) à 0 mole d'alcool par minute et par kg de silane pendant la durée totale nécessaire pour réaliser la consommation de la quantité totale d'alcool introduite ;
- cas de plusieurs paliers réalisés par exemple comme suivant :
   - un premier palier où le débit diminue de manière programmée de 0,2 (débit initial) à 0,03 (débit final) mole d'alcool par minute et par kg de silane pendant une durée représentant 15 à 25 % de la durée totale nécessaire pour réaliser la consommation de la quantité totale d'alcool introduite ;
   - un second palier où le débit diminue de manière programmée de 0,03 (débit initial) à 0,01 (débit final) mole d'alcool par minute et par kg de silane pendant une durée représentant 25 à 35 % de la durée totale nécessaire ; et
   - un troisième palier où le débit diminue de manière programmée de 0,01 (débit initial) à 0 (débit final) mole d'alcool par minute et par kg de silane pendant une durée représentant 40 à 60 % de la durée totale nécessaire ;
avec la possibilité, à la fin du troisième palier, de réaliser une période de reflux sans coulée pendant une durée représentant au plus 20 % de la durée totale nécessaire.

Selon une troisième disposition de mise en oeuvre de la présente invention qui est préférée (DP3), on engage un alcool anydre renfermant moins de 1000 ppm d'eau et la quantité totale d'alcool de formule (1) introduite [par exemple en fin des coulées (pour VA1) ou en fin de coulée unique (pour VA2)] est telle que le rapport molaire alcool de formule (I) / silane de formule (II) se situe dans l'intervalle allant de 1,05 à 2,5.

Selon une quatrième disposition de mise en oeuvre de la présente invention qui est préférée (DP4), on engage une quantité de phase solvant(s) qui est déterminée de manière à permettre une concentration en alcool de formule (I) dans l'ensemble alcool de formule (I) + phase solvant(s) qui se situe dans l'intervalle allant de 10 à 30% en poids.

Dans le cadre de la quatrième disposition DP4, la quantité de phase solvant(s) qui convient bien (DP4+) est celle qui, en association avec les quantités des autres ingrédients, permet de satisfaire les exigences précitées en matière de % en poids, et qui permet en plus d'établir que la quantité de solvant(s) représente de 45 à 55 % par rapport au poids de l'ensemble solvant(s) + silane de formule (II).

Selon une cinquième disposition de mise en oeuvre de la présente invention qui est préférée (DP5), le procédé est conduit avec des réactifs de formules (I) et (II) où :
- le symbole Hal représente un atome d'halogène choisi parmi les atomes de chlore, brome et iode ;
- les symboles R¹ sont choisis parmi les radicaux méthyle, éthyle, n-propyle, isopropyle, n-butyle, CH₃OCH₂- CH₃OCH₂CH₂- et CH₃OCH(CH₃)CH₂- ;
- les symboles R² et R³ sont choisis parmi les radicaux : méthyle, éthyle, n-propyle, isopropyle, n-butyle, n-hexyle et phényle.

Dans le cadre de la cinquième disposition DP5, le procédé qui convient bien (DP5+) est conduit avec des réactifs de formules (I) et (II) où :
- le symbole Hal représente un atome de chlore ;
- les symboles R¹ sont choisis parmi les radicaux méthyle, éthyle, n-propyle et isopropyle, (quand R¹ est par exemple éthyle, l'alcool utilisé est alors un alcanol consistant dans l'éthanol) ;
- les symboles R² et R³ représentent chacun le même radical méthyle (quand R¹,R² et R³ = méthyle et Hal = Cl, le silane de départ est alors le chloropropyl-3 diméthylchlorosilane).

Selon une disposition de mise en oeuvre de la présente invention qui convient spécialement bien, le procédé est conduit en faisant appel à l'ensemble des dispositions de mise en oeuvre préférées DP1, DP2-VA1 ou DP2-VA2, DP3, DP4 et DP5 telles que définies ci-avant.

Selon une disposition de mise en oeuvre de la présente invention qui convient plus spécialement bien, le procédé est conduit en faisant appel aux dispositions de mise en oeuvre DP1, DP2-VAl, DP3, DP4 et DP5 telles que définies ci-avant.

Selon une disposition de mise en oeuvre de la présente invention qui convient encore plus spécialement bien, le procédé est conduit en faisant appel aux dispositions de mise en oeuvre DP1+, DP2-VAl+, DP3, DP4+ et DP5+ telles que définies ci-avant.

En fin de réaction d'alcoolyse, on réalise une distillation du milieu réactionnel pour en sortir l'alcool non consommé et la phase solvant(s).

A noter qu'il peut être avantageux de réaliser au besoin, avant cette étape de distillation finale, une étape de finition pour éliminer les traces éventuelles d'acidité résiduelle et ainsi améliorer le taux de transformation (TT) du silane de formule (II) (le gain de TT généré par cette finition pouvant atteindre 2 % ou même davantage) en introduisant dans le mélange réactionnel final une base telle que l'amoniac ou la triéthylamine.

Le distillat qui est recueilli à l'issue de la distillation précitée, comprenant l'alcool de formule (I) non consommé et la phase solvant(s), peut être recyclé sans inconvénient dans une nouvelle réaction d'alcoolyse. Dans ce contexte, on pourra par exemple enchaîner les opérations suivantes :
- introduction du distillat à base d'alcool et de solvant(s) issue d'une opération précédente dans le réacteur contenant une nouvelle charge de silane de formule (II), en rajoutant au besoin de l'alcool frais et/ou un complément de phase solvant(s) pour que la concentration en alcool de formule (I) dans l'ensemble alcool de formule (I) + phase solvant(s) organique(s) se situe dans l'intervalle précité allant de 5 à 30% en poids ;
- puis chauffage du mélange pour porter sa température à la valeur correspondant à sa température d'ébullition dans les conditions de pression présidant à la réalisation du procédé et établissement d'un régime de reflux total stationnaire ;
- puis réalisation ensuite d'une période de reflux sans coulée d'alcool dans les conditions expliquées ci-avant dans le présent mémoire pendant la durée nécessaire à la consommation chimique de l'alcool présent dans le milieu réactionnel, cette consommation pouvant être suivie par l'examen de la quantité d'acide halogéné formé ;
- puis réalisation d'une coulée, soit en discontinu soit en continu, de la quantité complémentaire d'alcool qui est nécessaire pour respecter les exigences expliquées ci-avant en matière de rapport molaire alcool de formule (I) / silane de formule (II) ;
- puis achèvement de la réaction comme expliqué ci-avant par réalisation d'une seconde période de reflux sans coulée pour atteindre un taux de transformation (TT) du silane de formule (II) au moins égal à 96% (en mole).

Il est possible de conduire le procédé selon l'invention en effectuant la réaction d'alcoolyse dans un réacteur fonctionnant de façon continue, de façon semi-continue ou de façon discontinue. On obtient : un taux de transformation (TT) du silane de départ de formule (II) qui est au moins égal à 96 % (en mole), et une sélectivité (RT) en organo alcoxydialkylsilane de formule (III) qui est au moins égale à 95 % (en mole). Grace à la présente invention, les réactions secondaires d' oligomérisation de la fonction silane par l'eau sont largement minimisées.

L' organo alcoxydialkylsilane de formule (III) ainsi obtenu est plus particulièrement utilisable comme produit de départ pour la préparation de composés organosiliciques contenant du soufre, répondant à la formule générale moyenne (IV): 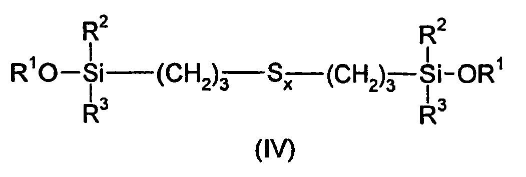 dans laquelle :
- x est un nombre, entier ou fractionnaire, allant de 1,5 ± 0,1 à 5 ± 0,1 ; et
- les symboles R¹, R², R³ sont tels que définis supra.

Dans la formule (IV) précédente, les radicaux R¹ préférés sont choisis parmi les radicaux : méthyle, éthyle, n-propyle, isopropyle et n-butyle ; de manière plus préférée, les radicaux R¹ sont choisis parmi les radicaux : méthyle, éthyle, n-propyle et isopropyle.

Les radicaux R² et R³ préférés sont choisis parmi les radicaux : méthyle, éthyle, n-propyle, isopropyle, n-butyle, n-hexyle et phényle ; de manière plus préférée, les radicaux R² et R³ correspondent au radical méthyle.

Le nombre x, entier ou fractionnaire, va de préférence de 3 ± 0,1 à 5 ± 0,1, et de manière plus préférée de 3,5 ± 0,1 à 4,5 ± 0,1.

Les monoorganoxysilanes polysulfurés répondant à la formule (IV) qui sont spécialement visés par la présente invention, sont ceux de formule : 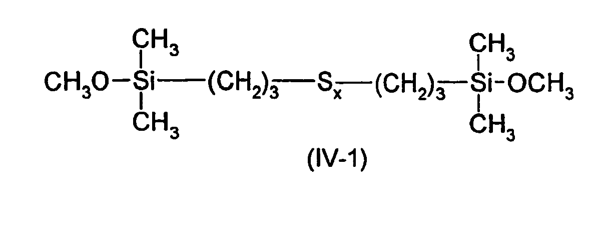 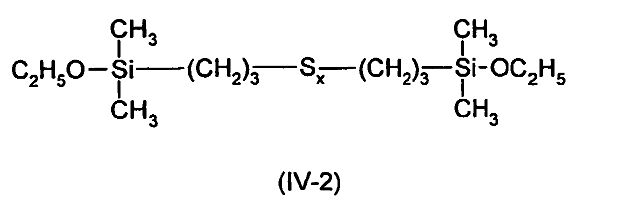 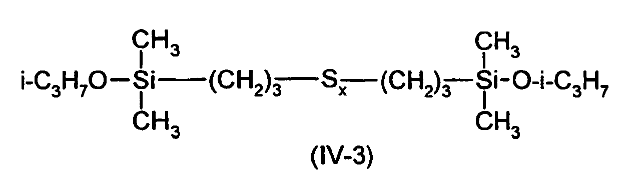 dans lesquelles le symbole x est un nombre entier ou fractionnaire allant de 1,5 ± 0,1 à 5 ± 0,1, de préférence de 3 ± 0,1 à 5 ± 0,1, et de manière plus préférée de 3,5 ± 0,1 à 4,5 ± 0,1.

Dans le présent mémoire, on précisera que le symbole x des formules (IV) et (IV-1 à 3) est un nombre, entier ou fractionnaire, qui représente le nombre d'atomes de soufre présents dans une molécule de formule (IV).

En pratique ce nombre est la moyenne du nombre d'atomes de soufre par molécule de composé considéré, dans la mesure où la voie de synthèse choisie donne naissance à un mélange de produits polysulfurés ayant chacun un nombre d'atomes de soufre différent. Les monoorganoxysilanes polysulfurés synthétisés sont en fait constitués d'une distribution de polysulfures, allant du monosulfure à des polysulfures plus lourds (comme par exemple S_{≥5}), centrée sur une valeur moyenne en mole (valeur du symbole x) se situant dans les domaines général (x allant de 1,5 ± 0,1 à 5 ± 0,1), préférentiel (x allant de 3 ± 0,1 à 5 ± 0,1) et plus préférentiel (x allant de 3,5 ± 0,1 à 4,5 ± 0,1) mentionnés supra.

Les produits de formule (IV) peuvent être préparés par un procédé qui est réalisé en enchaînant les étapes (a), (b) et (c), dans la définition desquelles le groupe amovible A correspond au symbole Hal représentant un atome d'halogène et est un atome de chlore :
+ l'étape (a) correspondant au procédé qui se déroule selon l'équation : 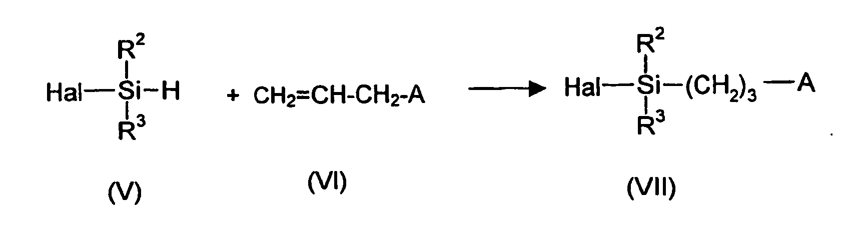 où :
   - le symbole Hal représente un atome de chlore, et
   - les symboles A, R² et R³ sont tels que définis supra,
      la réaction étant réalisée:
   - en faisant réagir à une température allant de -10°C à 200°C une mole du diorganohalogénosilane de formule (V) avec une quantité molaire stoechiométrique ou différente de la stoechiométrie du dérivé d'allyle de formule (VI) en opérant, en milieu homogène ou hétérogène, en présence d'un initiateur consistant :
   - soit dans un activateur catalytique consistant dans : (i) au moins un catalyseur comprenant au moins un métal de transition ou un dérivé dudit métal, pris dans le groupe formé par Co, Ru, Rh, Pd, Ir et Pt ; et éventuellement (2i) au moins un promoteur ou auxiliaire de réaction d'hydrosilylation,
   - soit dans un activateur photochimique, consistant en particulier dans un rayonnement ultraviolet approprié ou dans un rayonnement ionisant approprié,
   et éventuellement en isolant le dérivé de diorganohalogénosilylpropyle de formule (VII) formé ;
+ l'étape (b) correspondant au procédé décrit dans les pages 2 à 8 précédentes ;
+ et l'étape (c) correspondant au procédé mettant en oeuvre la réaction : 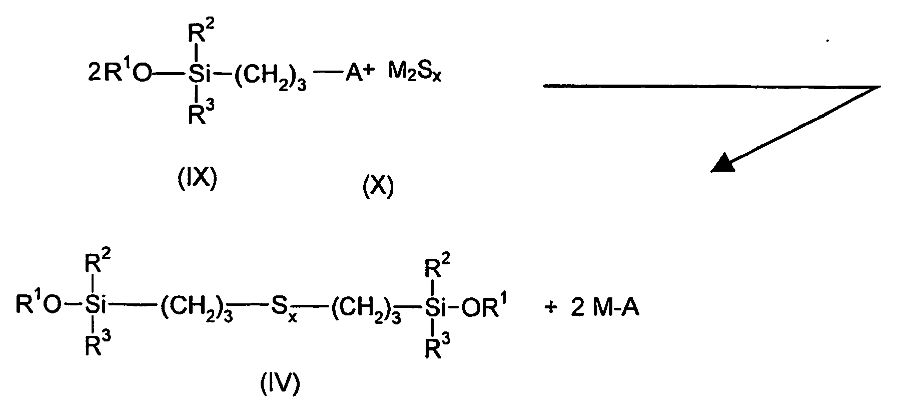
où :
- les symboles R¹, R², R³, A et x sont tels que définis supra, et
- le symbole M représente un métal alcalin,
   la réaction étant réalisée :
- en faisant réagir à une température allant de 20°C à 120°C, soit le milieu réactionnel obtenu à l'issue de l'étape (b), soit le dérivé de monoorganoxydiorganosilylpropyle de formule (IX) pris isolément après séparation dudit milieu réactionnel, avec le polysulfure métallique de formule (X) à l'état anhydre, en utilisant 0,5 ± 15% mole de polysulfure métallique de formule (X) par mole du réactif de formule (IX) et en opérant éventuellement en présence d'un solvant organique polaire (ou non polaire) inerte, et
- en isolant le polysulfure de bis-(monoorganoxysilylpropyle) de formule (I) formé.

L'étape (a) consiste à faire réagir le diorganohalogénosilane de formule (V) avec le dérivé d'allyle de formule (VI) en présence d'un initiateur choisi. L'initiateur que l'on utilise comprend tous les initiateurs, répondant aux types indiqués supra, qui sont efficaces pour activer la réaction entre une fonction =SiH et une insaturation éthylénique.

Selon une disposition préférée concernant l'initiateur, ce dernier est choisi parmi les activateurs catalytiques. Ces activateurs catalytiques comprennent :
- au titre du (ou des) catalyseur(s) (i) : (i-1) au moins un métal de transition élémentaire finement divisé ; et/ou (i-2) un colloïde d'au moins un métal de transition ; et/ou (i-3) un oxyde d'au moins un métal de transition ; et/ou (i-4) un sel dérivé d'au moins un métal de transition et d'un acide minéral de carboxylique ; et/ou (i-5) un complexe d'au moins un métal de transition équipé de ligand(s) organique(s) pouvant posséder un ou plusieurs hétéroatome(s) et/ou de ligand(s) organosilicique(s) ; et/ou (i-6) un sel tel que défini supra où la partie métallique est équipée de ligand(s) tel(s) que défini(s) aussi supra ; et/ou (i-7) une espèce métallique choisie parmi les espèces précitées (métal de transition élémentaire, oxyde, sel, complexe, sel complexé) où le métal de transition est associé cette fois à au moins un autre métal choisi dans la famille des éléments des groupes 1b, 2b, 3a, 3b, 4a, 4b, 5a, 5b, 6b, 7b, et 8 (sauf Co, Ru, Rh, Pd, Ir et Pt) de la classification périodique telle que publiée dans "Hanbook of Chemistry and Physics, 65ème édition, 1984-1985, CRC Press, Inc.", ledit autre métal étant pris sous sa forme élémentaire ou sous une forme moléculaire, ladite association pouvant donner naissance à une espèce bi-métallique ou pluri-métallique ; et/ou (i-8) une espèce métallique choisie parmi les espèces précitées (métal de transition élémentaire et association métal de transition - autre métal ; oxyde, sel, complexe et sel complexé sur base métal de transition ou sur base association métal de transition - autre métal) qui est supportée sur un support solide inerte tel que par exemple l'alumine, la silice, le noir de carbone, une argile, l'oxyde de titane, un aluminosilicate, un mélange d'oxydes d'aluminium et de zirconium, une résine polymère ;
- au titre du (ou des) promoteur(s) ou auxiliaire(s) optionnel(s) (2i) : un composé, qui peut présenté par exemple la forme d'un ligand ou d'un composé ionique, pris notamment dans le groupe formé par : un péroxyde organique ; un acide carboxylique ; un sel d'acide carboxylique ; une phosphine tertiaire ; une amine ; un amide ; une cétone linéaire ou cyclique ; un trialkylhydrogénosilane ; le benzothriazole ; la phénothiazine ; un composé de type métal trivalent-(C₆H₅)₃ où métal = As, Sb ou P ; un mélange d'amine ou de cyclohexanone avec un composé organosilicique comprenant un ou plusieurs groupe(s) =Si-H ; les composés CH₂=CH-CH₂-OH ou CH₂=CH-CH₂-OCOCH₃ ; une lactone ; un mélange de cyclohexanone avec la triphénylphosphine ; un composé ionique comme par exemple un nitrate ou un borate de métal alcalin ou d'imidazolinium, un halogénure de phosphonium, un halogénure d'ammonium quaternaire, un halogénure d'étain Il.

Selon une disposition plus préférée concernant initiateur, ce dernier est choisi parmi les activateurs catalytiques préférés mentionnés ci-avant qui comprennent, au titre du (ou des) catalyseur(s) (i), l'une et/ou l'autre des espèces métalliques
(i-1) à (i-8) où le métal de transition appartient au sous-groupe suivant : Ir et Pt.

Selon une disposition encore plus préférée concernant l'initiateur, ce dernier est choisi parmi les activateurs catalytiques préférés mentionnés ci-avant qui comprennent, au titre du (ou des) catalyseur(s) (i), l'une et/ou l'autre des espèces métalliques (i-1) à (i-8) où le métal de transition est Ir. Dans le cadre de cette disposition encore plus préférée, des catalyseurs à base d'Ir qui conviennent sont en particulier :

[IrCl(CO)(PPh₃)₂]

[Ir(CO)H(PPh₃)₃]

[Ir(C₈H₁₂)(C₅H₅N)P(C₆H₁₁)₃]PF₆

[IrCl₃],nH₂O

H₂[IrCl₆],nH₂O

(NH₄)₂IrCl₆

Na₂IrCl₆

K₂IrCl₆

KIr(NO)Cl₅

[Ir(C₈H₁₂)₂]⁺BF₄⁻

[IrCl(CO)₃]ₙ

H₂IrCl₆

Ir₄(CO)₁₂

Ir(CO)₂(CH₃COCHCOCH₃)

Ir(CH₃COCHCOCH₃)

IrBr₃

IrCl₃

IrCl₄

IrO₂

(C₆H₇)(C₈H₁₂)Ir.

Dans le cadre de la disposition encore plus préférée mentionnée ci-avant, d'autres catalyseurs à base d'Ir qui conviennent encore mieux sont pris dans le groupe des complexes de l'iridium de formule :

[Ir (R⁴)_{y} (R⁵)]_{z} (XI)

dans laquelle :
- le symbole R⁴ représente soit un ligand monodentate L et dans ce cas y = 2, soit un ligand bidentate (L)₂ et dans ce cas y = 1, et
- le symbole R⁵ représente, soit Hal tel que défini supra, et dans ce cas z = 2, soit un ligand de type LX et dans ce cas z = 1.

Conviennent bien des catalyseurs répondant à la définition précitée dans laquelle :
- R⁴ est un ligand comportant au moins une double liaison carbone=carbone et/ou au moins une triple liaison C≡C, ces liaisons insaturées pouvant être conjuguées ou non conjuguées, ledit ligand : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes, et
- R⁵, outre Hal, peut représenter aussi un ligand LX comme notamment un ligand dérivé de l'acétylacétone, d'un β-cétoester, d'un ester malonique, d'un composé allylé.

Conviennent très bien des catalyseurs de formule (XI) où le symbole R⁵ représente Hal et z = 2.

Quand on utilise des complexes de l'iridium de formule (XI), il est très avanrageux d'ajouter dans le milieu réactionnel au moins un auxiliaire (2i) à l'état libre ou supporté sélectionné dans le groupe de composés comprenant :
➢ (i) les cétones,
➢ (ii) les éthers,
➢ (iii) les quinones,
➢ (iv) les anhydrides,
➢ (v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHl : étant linéaires ou cycliques (mono ou polycyclique), ayant de 4 à 30 atomes de carbone, ayant de 1 à 8 insaturations éthyléniques et/ou acétyléniques et comportant éventuellement un ou plusieurs hétéroatomes,
➢ (vi) et leurs mélanges,
avec la condition selon laquelle quand l'auxiliaire comprend un ou plusieurs CHI tels que définis supra, alors ce (ces) CHI est (sont) mélangé(s) avec au moins un autre auxiliaire différent d'un CHl.

Conformément à la présente invention, on entend notamment par "mélanges (vi)" de composés auxiliaires :
o (vi.1). tout mélange de composés (i) et/ou (ii) et/ou (iii) et/ou (iv) et/ou (v),
o (vi.2). tout composé dont la molécule comprend au moins deux fonctions chimiques différentes et sélectionnées dans le groupe comprenant les fonctions : cétone, éther, anhydride, quinone, C=C, et C= C, caractéristiques des composés (i) à (v),
o (vi.3) tout mélange de composés (vi.2),
o (vi.4) ainsi que tout mélange à base d'au moins un composé (i) à (v) et d'au moins un composé (vi.2).

Ce ou ces auxiliaires (i) à (vi) peuvent être utilisés sous forme liquide ou solide. Dès lors qu'ils sont liquides, ils peuvent être introduits en quantité telle dans le milieu réactionnel qu'ils jouent, en plus d'un rôle de promoteur d'hydrosilylation, un rôle de solvant de la réaction. Le fait de pouvoir être mis en oeuvre sous forme liquide est un avantage opérationnel très fort pour le procédé de l'invention. L'éventuelle fonction de solvant de l'auxiliaire peut également permettre, en particulier lorsqu'il s'agit d'un solvant lourd (à savoir un solvant ayant un point d'ébullition sous la pression atmosphérique qui est supérieur à celui du composé de formule (VII), comme par exemple un polyéther), d'améliorer la stabilité du milieu réactionnel et donc la sécurité du procédé. En outre, cela offre des possibilités de récupération aisée du catalyseur et donc de recyclage de ce dernier.

Lorsque l'auxiliaire de types (i) à (vi) est à l'état libre, il peut être introduit dans le milieu réactionnel selon un rapport molaire, par rapport à l'iridium métal du complexe de formule (XI), d'au moins 0,2, de préférence d'au moins 1. Selon la nature des ligands, on peut choisir plus préférentiellement un rapport molaire supérieur à 10 et même supérieur à 100.

Dans le cas où l'auxiliaire comprend au moins un composé sélectionné dans le groupe des CHl (v) pris en eux-mêmes ou en mélanges entre eux, la concentration en catalyseur de formule (XI) est telle que le rapport molaire Iridium / silane de formule (V), exprimé en moles, est inférieur ou égal à 400.10⁻⁶, de préférence à 200.10⁻⁶, et, plus préférentiellement encore à 50.10⁻⁶.

Comme exemples de cétones (i) convenables, on peut se référer à celles définies dans l'US-B-3 798 252 et dans les PL-A-176036, PL-A-174810, PL-A-145670 et JP-A-75024947.

Comme exemples d'éthers (ii) convenables, on peut se référer à ceux définis dans l'US- B-4 820 674 et dans le JP-A-52093718.

Avantageusement, l'auxiliaire appartenant aux types (i) à (vi) est sélectionné dans le groupe comprenant notamment : cyclohexanone, 2-cyclohexen-1-one, isophorone, 2-benzylidenecyclohexanone, 3-Methylene-2-norbornanone, 4-hexen-3-one, 2-allylcyclohexanone, 2-Oxo-1-cyclohexaneproprionitrile, 2-(1-cyclohexenyl)cyclohexanone, monoglyme, éthy-lène-glycoldivinyléther, éther éthylique, benzoquinone, phényl-benzoquinone, anhydride maléïque, anhydride succinique allylé, 3-benzylidène-2,4-pentadione, phénothiazine, (méthylvinyl)cyclotétrasiloxane (D4 vinylé), 4-phényl-3-butyn-2-one, butadiène-1,3, hexadiène-1,5, cyclohexadiène-1,3, cyclooctadiène-1,5 (COD), cyclododécatriène-1,5,9, divinyltétraméthylsiloxane (DVTMS), norboma-diène et leurs mélanges.

Selon un mode préféré de mise en oeuvre de l'invention, l'auxiliaire est un mélange (vi) comportant au moins un CHI (v) -de préférence le COD- et au moins une cétone (i) - de préférence la cyclohexanone- et/ou au moins un éther (ii) et/ou au moins une quinone (iii). Dans ce mode préféré de mise en oeuvre du procédé selon l'invention, la concentration en catalyseur de formule (XI) est telle que le rapport molaire Iridium / silane de formule (V), exprimé en moles, est inférieur ou égal à 100.10⁻⁶, de préférence à 60.10⁻⁶, et, plus préférentiellement encore est compris entre 40.10⁻⁶ et 1.10⁻⁶.

Comme exemples de complexes de l'iridium de formule (IV) qui conviennent spécialement bien, on citera ceux correspondant au mode encore plus préféré, dans la formule desquels : le symbole R⁴ est un ligand choisi parmi le butadiène-1,3, l'hexadiène-1,5, le cyclohexadiène-1,3, le cyclooctadiène-1,5 (COD), le cyclododécatriène-1,5,9, le divinyltétraméthyl-siloxane et le norbornadiène.

A titre d'exemples spécifiques de complexes de l'iridium de formule (XI) qui conviennent encore mieux, on citera les catalyseurs suivants : ,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)düridium,
di-µ-chlorobis(η-2,5-norbomadiene)diiridium,
di-µ-bromobis(η-2,5-norbomadiene)diiridium,
di-µ-iodobis(η-2,5-norbornadiene)diiridium.

Le catalyseur peut être utilisé, et il s'agit là d'une autre disposition préférentielle, en milieu homogène, comme cela est décrit dans JP-B-2.938.731. Dans ce cadre, la réaction peut être conduite soit de façon continue, soit de façon semi-continue, soit de façon discontinue. En fin d'opération, le produit de la réaction est séparé et recueilli par distillation du milieu réactionnel, et il est possible de recycler le catalyseur en réalisant une nouvelle charge de réactifs sur un culot de distillation contenant le catalyseur issu de l'étape de distillation du produit de l'opération précédente, avec addition complémentaire éventuelle de catalyseur neuf. Dans le cas de l'emploi de complexes, le recyclage du catalyseur peut être amélioré en additionnant aussi une petite quantité de ligand.

Le catalyseur peut être utilisé encore en milieu hétérogène. Ce mode opératoire fait appel en particulier à la mise en oeuvre d'un catalyseur qui est supporté sur un support solide inerte du type de ceux définis supra. Ce mode opératoire permet de réaliser la réaction dans un réacteur lit fixe fonctionnant de façon continue, de façon semi-continue ou de façon discontinue avec un recyclage. Il est également possible d'effectuer la réaction en réacteur standard agité fonctionnant de façon continue, semi-continue ou discontinue.

S'agissant des autres conditions réactionnelles, la réaction est réalisée dans une large gamme de températures allant de préférence de -10°C à 100°C, en opérant sous la pression atmosphérique ou sous une pression supérieure à la pression atmosphérique qui peut atteindre ou même dépasser 20.10⁵Pa.

La quantité du dérivé d'allyle de formule (VI) utilisée est de préférence de 1 à 2 moles pour 1 mole de composé organosilicique. Quant à la quantité de catalyseur(s) (i), exprimée en poids de métal de transition pris dans le groupe formé par Co, Ru, Rh, Pd, Ir, et Pt, elle se situe généralement dans l'intervalle allant de 1 à 10 000 ppm, de préférence allant de 10 à 2000 ppm et plus préférentiellement allant de 50 à 1000 ppm, basés sur le poids de composé organosilicique de formule (V). La quantité de promoteur(s) (2i), quand on en utilise un ou plusieurs, exprimée en nombre de moles de promoteur(s) par atome-gramme de métal de transition pris dans le groupe formé par Co, Ru, Rh, Pd, Ir et Pt, se situe généralement dans l'intervalle allant de 0,1 à 1000, de préférence allant de 0,2 à 500 et plus préférentiellement allant de 1 à 300. Le dérivé de diorganohalogénosilylpropyle de formule (VII) est obtenu avec un rendement molaire au moins égal à 80 % basé sur le composé organosilicique de formule (V) de départ.

A propos de l'étape (c), et selon une disposition préférée, les polysulfures métalliques de formule (X) anhydres sont préparés par réaction d'un sulfure alcalin, contenant éventuellement de l'eau de cristallisation, de formule M₂S (XII) où le symbole M a la signification donnée supra (métal alcalin), avec du soufre élémentaire en opérant à une température allant de 60°C à 300°C, éventuellement sous pression et éventuellement encore en présence d'un solvant organique anhydre.

De manière avantageuse, le sulfure alcalin M₂S mis en oeuvre est le composé disponible industriellement qui est généralement sous forme d'un sulfure hydraté ; un sulfure alcalin de ce type qui convient bien est le sulfure Na₂S disponible dans le commerce qui est un sulfure hydraté contenant 55 à 65% en poids de Na₂S.

Selon une disposition plus préférée de conduite de l'étape (c), les polysulfures métalliques de formule (X) anhydres sont préparés au préalable à partir d'un sulfure alcalin M₂S sous forme d'un sulfure hydraté, selon un processus qui consiste à enchaîner les phases opératoires (1) et (2) suivantes :
- phase (1), où on procède à une déshydratation du sulfure alcalin hydraté en appliquant la méthode appropriée qui permet d'éliminer l'eau de cristallisation tout en conservant le sulfure alcalin à l'état solide, pendant la durée de la phase de déshydratation ;
- phase (2), où on procède ensuite à la mise en contact d'une mole de sulfure alcalin déshydraté obtenu avec n(x-1) moles de soufre élémentaire, en opérant à une température allant de 20°C à 120°C, éventuellement sous pression et éventuellement encore en présence d'un solvant organique anhydre, le facteur n précité se situant dans l'intervalle allant de 0,8 à 1,2 et le symbole x étant tel que défini supra.

A propos de la phase (1), comme protocole de déshydratation qui convient bien, on citera notamment le séchage du sulfure alcalin hydraté, en opérant sous un vide partiel allant de 1,33.10²Pa à 40.10²Pa et en portant le composé à sécher à une température allant, en début de séchage, de 70°C à 85°C, puis en élevant ensuite progressivement la température en cours de séchage de la zone allant de 70°C à 85°C jusqu'à atteindre la zone allant de 125°C à 135°C, en suivant un programme prévoyant une première montée en température de +10°C à +15°C au bout d'une première durée variant de 1 heure à 6 heures, suivie d'une seconde montée en température de +20°C à +50°C au bout d'une seconde durée variant de 1 heure à 4 heures.

A propos de la phase (2), comme protocole de sulfuration qui convient bien, on citera la réalisation de cette réaction en présence d'un solvant organique anhydre ; les solvants appropriés sont notamment les alcools aliphatiques inférieurs en C1-C4 anhydres, comme par exemple le méthanol ou l'éthanol anhydre. Le nombre d'atomes de soufre élémentaire Sₓ dans le polysulfure métallique M₂Sₓ est fonction du rapport molaire du S par rapport à M₂S ; par exemple, l'utilisation de 3 moles de S (n=1 et x-1=3) par mole de M₂S donne le tétrasulfure alcalin de formule (X) où x=4.

Pour en revenir à la réalisation de l'étape (c), cette dernière est réalisée dans une large gamme de températures allant de préférence de 50°C à 90°C, en opérant de préférence encore en présence d'un solvant organique et, dans ce cadre, on utilisera avantageusement les alcools dont on a parlé ci-avant à propos de la conduite de la phase (2).

Le produit M-A, et en particulier l'halogénure M-Hal, formé en cours de réaction est éliminé généralement en fin d'étape par exemple par filtration.

Le polysulfure de bis-(monoorganoxydiorganosilylpropyl) de formule (I) formé est obtenu avec un rendement molaire au moins égal à 80%, basé sur le dérivé de monoorganoxydiorganosilylpropyle de formule (IX) de départ.

Les exemples suivants illustrent la présente invention sans en limiter la portée.

### Exemple 1 :

L'appareillage utilisé dans cet exemple est composé : d'un réacteur parfaitement agité et surmonté d'une colone de distillation ; et d'un condenseur disposé en tête de colonne équipé d'un timer permettant de régler le débit de reflux dans la colonne. L'éthanol anhydre (teneur en eau inférieure à 1000 ppm) est introduit par une pompe et un tube plongeant dans le réacteur. L'acide halogéné est récupéré dans un piège à soude situé après le condenseur.

On charge initialement dans le réacteur un mélange équimassique de chloropropyl-3 diméthylchlorosilane et de cyclohexane, soit 300 g de chloropropyl-3 diméthylchlorosilane (1,75 moles) et 300 g de cyclohexane. Le mélange est porté à sa température d'ébullition, soit 94 °C à la pression atmosphérique. La température en tête de colonne est de 80,6 °C, température d'ébullition du cyclohexane à la pression atmosphérique. Tout le flux vapeur est condensé et renvoyé vers le réacteur.

Une fois le procédé en régime stationnaire (température stationnaire dans la colonne), on commence à introduire l'éthanol dans le réacteur. Le mode d'intoduction de l'alcool se fait selon le protocole opératoire discontinu VA1 qui se décompose en :
1) une première coulée d'une première fraction d'alcool (88,8 g soit 1,93 môles) correspondant à une proportion qui représente 73,4 % en mole par rapport à la quantité molaire totale d'alcool utilisé, cette première coulée étant réalisée avec un débit d'alcool de 0,16 mole d'alcool par minute et par kg de silane et pendant une durée de 40 minutes (représentant 18 % de la durée totale nécessaire pour réaliser la consommation de la quantité totale d'alcool introduite) ;
2) une première période de reflux sans coulée, réalisée pendant une durée de 1 heure (représentant 27 % de la durée totale nécessaire telle que définie ci-dessus) ;
3) une seconde coulée d'une seconde fraction d'alcool (32,2 g soit 0,70 mole) correspondant à une proportion qui représente 26,6 % en mole par rapport à la quantité molaire totale d'alcool utilisé, cette seconde coulée étant réalisée avec un débit d'alcool de 0,08 mole d'alcool par minute et par kg de silane et pendant une durée de 30 minutes (représentant 14 % de la durée totale nécessaire) ; et
4) une seconde période de reflux sans coulée, réalisée pendant une durée 90 minutes (représentant 40 % de la durée totale nécessaire).

Les conditions de reflux total sont maintenues tout au long de chaque coulée et période de reflux : seul l'acide chlorohydrique qui n'est pas condensé sort du système et est récupéré dans le piège à soude. La température dans la colonne est de 65°C qui est la température de l'azéotrope entre le cyclohexane et l'éthanol. L'avancement de la réaction peut être directement suivi en quantifiant la quantité d'acide chlorohydrique dégazé, par simple pesée du piège à soude tout au long de la réaction.

Durant la première période de reflux total sans coulée de 1 heure, on note une prise de poids du piège à soude qui dénote le dégazage de l'acide chlorohydrique. Durant cette période le TT du silane de départ passe de 70 à 88 %. Au bo ut d'une heure, la masse du piège n'évolue plus et on recommence à introduire de l'éthanol. A la fin de la seconde coulée d'alcool, le TT du chloropropyl-3 diméthylchlorosilane est alors de 92%. A la fin de la seconde période de reflux sans coulée, on atteint un TT de 98.5%. Le rapport molaire quantité totale d'éthanol introduit /chloropropyl-3 diméthylchlorosilane est égal à 1,5. La quantité totale d'acide chlorhydrique récupérée dans le piège à la fin de la seconde période de reflux sans coulée représente 93 % en poids de la quantité produite par la réaction d'alcoolyse.

### Finition :

On introduit ensuite dans le réacteur de l'ammoniac gaz (soit 0,5 g d'ammoniac ; cette quantité inclut un excès de 20% par rapport à la stoéchiométrie de la réaction) pour atteindre un TT de 100%.

Le milieu réactionnel ainsi obtenu est ensuite distillé, pour soutirer le cyclohexane et l'éthanol restant. Le distillat ainsi récupéré renferme 300 g de cyclohexane et 40 g d'éthanol résiduel. Le culot de distillation contenant le chloropropyl-3 éthoxydiméthylsilane est filtré pour en retirer la chlorure d'ammonium formé par la réaction entre l'ammoniac et l'acide chlorohydrique résiduel.

Le taux de transformation final du chloropropyl-3 diméthylchlorosilane est selon ce procédé de 100%, et la sélectivité en chloropropyl-3 éthoxydiméthylsilane est supérieure à 97 %. La sélectivité en produits secondaires, le dimère, reste inférieure à 2%, la quantité d'eau introduite étant très faible.

### Exemple 2 :

On conserve l'appareillage de l'exemple 1. Les quantités initiales de chloropropyl-3 diméthylchlorosilane et de cyclohexane sont identiques à celles de l'exemple 1. Par contre, le mode d'intoduction de l'alcool (161 g soit 3,5 moles) se fait selon le protocole opératoire continu à coulée unique VA2 qui consiste à réaliser les trois paliers suivants :
- un premier palier où le débit diminue de manière programmée de 0,2 (débit initial) à 0,03 (débit final) mole d'alcool par minute et par kg de silane pendant une durée représentant 20 % de la durée totale nécessaire pour réaliser la consommation de la quantité totale d'alcool introduite (égale ici à 320 minutes) ;
- un second palier où le débit diminue de manière programmée de 0,03 (débit initial) à 0,01 (débit final) mole d'alcool par minute et par kg de silane pendant une durée représentant 30 % de la durée totale nécessaire ; et
- un troisième palier où le débit diminue de manière programmée de 0,01 (débit initial) à 0 (débit final) mole d'alcool par minute et par kg de silane pendant une durée représentant 50 % de la durée totale nécessaire.

Le rapport molaire quantité totale d'éthanol introduit /chloropropyl-3 diméthylchlorosilane est égal à 2. La quantité totale d'acide chlorhydrique récupérée dans le piège à la fin du troisième palier représente 94 % en poids de la quantité produite par la réaction d'alcoolyse.

Dans ces conditions, le TT du silane de départ, à la fin de la réaction, est de 99.2 % (en mole).

### Exemple 3 :

Dans cet exemple, on décrit une nouvelle réaction d'alcoolyse dans laquelle on procédé au recyclage de l'éthanol et du cyclohexane récupérés à l'issue d'une opération précédente.

L'appareillage est identique à celui décrit dans l'exemple 1. On introduit dans le réacteur 300g d'un nouveau lot de chloropropyl-3 diméthylchlorosilane, puis le distillat récupéré à l'issue de l'étape de finition de l'exemple 1 renfermant 300g de cyclohexane et 40g d'éthanol.

On enchaîne ensuite les opérations suivantes :
- chauffage du mélange pour porter sa température à la valeur correspondant à sa température d'ébullition et établir un régime de reflux total stationnaire, en opérant à pression atmosphérique ;
- puis réalisation d'un période de reflux sans coulée d'alcool pendant 1 heure 40 minutes ;
- puis réalisation d'une coulée de 64,4 g (1,4 mole) d'éthanol avec un débit de 0,08 mole d'alcool par minute et par kg de silane pendant une durée de 60 minutes (le rapport molaire quantité totale d'éthanol / chloropropyl-3 diméthylchlorosilane est égal à 1,3) ;
- puis achèvement de la réaction par réalisation d'une seconde période de reflux sans coulée de 60 minutes.

Dans ces conditions, on atteind un taux de transformation (TT) du silane égal à 98,5% (en mole).

## Revendications

1. Procédé de préparation d'un organo alcoxydialkylsilane de formule :
R¹O-------(R²R³)Si---(CH₂)₃---A (III)
+ qui consiste à procéder à une mise en contact d'un alcool de formule :
R¹-OH (I)
avec un silane de formule :
Hal---(R²R³)Si-(CH₂)₃---A (II)
afin de réaliser la réaction d'alcoolyse dudit silane selon la réaction équilibrée suivante : 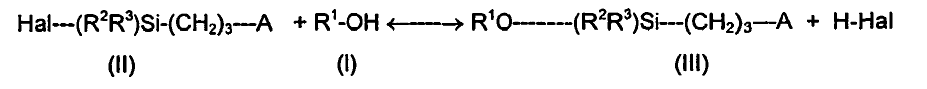 où:
- le symbole Hal représente un atome d'halogène choisi parmi les atomes de chlore, brome et iode,
- les symboles R¹, identiques ou différents, représentent chacun un groupe hydrocarboné monovalent choisi parmi un radical alkyle, linéaire ou ramifié, ayant de 1 à 15 atomes de carbone et un radical alcoxyalkyle, linéaire ou ramifié, ayant de 2 à 8 atomes de carbone ;
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ;
- A représente un groupe amovible choisi parmi : soit un atome d'halogène Hal appartenant aux atomes de chlore, brome et iode ; soit un radical para-R⁰-C₆H₄-SO₂-O- où R⁰ est un radical alkyle, linéaire ou ramifié en C1-C4 ; soit un radical R⁰-SO₂-O- où R⁰ est tel que défini ci-avant ; soit un radical R⁰-CO-O- où R⁰ est tel que défini ci-avant ;
+ en opérant, sous une pression égale à ou différente de la pression atmosphérique, dans un réacteur agité et surmonté d'une colonne de distillation et de son condenseur avec possibilité de reflux ;
+ en réalisant d'une part ladite mise en contact par introduction par coulée de l'alcool de formule (I) dans un mélange silane de formule (II) + phase solvant(s) organique(s), la phase solvant(s) pouvant être engagée au besoin - en partie - en mélange avec l'alcool de formule (I), et d'autre part l'élimination de l'acide halogéné formé de formule H-Hal par entraînement à l'aide de ladite phase solvant(s) organique(s), et
+ en récupérant l'organo alcoxydialkylsilane de formule (III) formé dans le réacteur par toute méthode appropriée connue de l'homme de métier ;
ledit procédé étant **caractérisé par** les points suivants :
■ le mélange silane de formule (II) + phase solvant(s) organique(s) est porté à une température qui est celle correspondant à sa température d'ébullition dans les conditions de pression présidant à la réalisation du procédé, et l'alcool commence à être introduit lorsque le condenseur surmontant le réacteur est chargé et est en régime de reflux stationnaire ;
■ la phase solvant(s) consiste dans un ou plusieurs solvants organiques qui est (sont) choisi(s) de manière à pouvoir remplir la double fonction : d'une part d'éliminer l'acide halogéné formé par entraînement et relargage du gaz du fait d'une très faible affinité de ladite phase avec l'acide, et d'autre part de présenter un équilibre liquide-vapeur avec l'alcool qui autorise une concentration en alcool de formule (I) dans l'ensemble alcool de formule (I) + phase solvant(s) organique(s) allant de 5 à 30% en poids ;
■ le mode d'introduction de l'alcool de formule (I) suit un protocole opératoire déterminé de manière à éviter, à tout moment lors de l'avancement de la réaction d'alcoolyse du silane de formule (II), une accumulation dans le réacteur de l'acide halogéné de formule H-Hal par solubilisation dans l'alcool de formule (I), de telle sorte que la quantité d'acide halogéné entraînée à l'aide de la phase solvant(s) représente, à tout moment lors de l'avancement de la réaction d'alcoolyse du silane de formule (II), plus de 90 % en poids de l'acide halogéné formé ;
■ la quantité totale d'alcool de formule (I) introduite est telle que le rapport molaire alcool de formule (I) / silane de formule (II) se situe dans l'intervalle allant de 1 à une valeur inférieure à 3 ;
■ la quantité de phase solvant(s) présente dans le réacteur à côté du silane de formule (II) est fonction de la nature de cette phase et elle est déterminée de manière à permettre de limiter en cours d'introduction la concentration en alcool de formule (I) dans l'ensemble alcool de formule (I) + phase solvant(s) organique(s) dans l'intervalle précité allant de 5 à 30% en poids.

2. Procédé selon la revendication 1, **caractérisé en ce que** la phase solvant(s) est constituée de solvant(s) dont la température d'ébullition, dans les conditions de pression présidant à la réalisation du procédé, est proche de celle de l'alcool de formule (I).

3. Procédé selon la revendication 1 ou 2, **caractérisé en ce que** le mode d'introduction de l'alcool de formule (I) fait appel au protocole opératoire VA1 qui se décompose en :
- au moins deux coulées de deux fractions d'alcool, la première fraction d'alcool correspondant à une proportion qui représente 60 à 90 % en mole par rapport à la quantité molaire totale d'alcool utilisé,
- au moins deux périodes de reflux sans coulée, chacune d'elles faisant suite à chaque coulée d'alcool effectuée ;
- le débit et la durée de la coulée de chaque fraction d'alcool ainsi que la durée de chaque période de reflux sans coulée étant règlés de manière à ce que chaque fraction d'alcool coulée soit consommée lors de la période de reflux sans coulée qui suit ladite coulée.

4. Procédé selon la revendication 1 ou 2, **caractérisé en ce que** le mode d'introduction de l'alcool de formule (I) fait appel au protocole opératoire VA2 qui consiste à réaliser une coulée unique continue d'alcool, mais en utilisant un débit qui décroit avec le degré d'avancement de la réaction d'alcoolyse du silane de formule (II) de manière à ce que la vitesse d'introduction de l'alcool suive la vitesse de sa consommation, cette étape de coulée unique pouvant être prolongée par une période de reflux sans coulée de durée variable.

5. Procédé selon l'une quelconque des revendication 1 à 4, **caractérisé en ce que** l'on engage un alcool anydre renfermant moins de 1000 ppm d'eau et la quantité totale d'alcool de formule (I) introduite est telle que le rapport molaire alcool de formule (I) / silane de formule (II) se situe dans l'intervalle allant de 1,05 à 2,5.

6. Procédé selon l'une quelconque des revendication 1 à 5, **caractérisé en ce que** on engage une quantité de phase solvant(s) qui est déterminée de manière à permettre une concentration en alcool de formule (I) dans l'ensemble alcool de formule (I) + phase solvant(s) qui se situe dans l'intervalle allant de 10 à 30% en poids.

7. Procédé selon l'une quelconque des revendication 1 à 6, **caractérisé en ce que** le procédé est conduit avec des réactifs de formules (I) et (II) où :
- le symbole Hal représente un atome d'halogène choisi parmi les atomes de chlore, brome et iode ;
- les symboles R¹ sont choisis parmi les radicaux méthyle, éthyle, n-propyle, isopropyle, n-butyle, CH₃OCH₂-, CH₃OCH₂CH₂- et CH₃OCH(CH₃)CH₂- ;
- les symboles R² et R³ sont choisis parmi les radicaux : méthyle, éthyle, n-propyle, isopropyle, n-butyle, n-hexyle et phényle.

8. Procédé selon les revendications 1, 2 et 7, **caractérisé en ce que**, lorsque le procédé est conduit en utilisant un alcanol de fomule (I) où R¹ est choisi parmi les radicaux méthyle, éthyle, n-propyle et isopropyle, le (ou les) solvant(s) qui convien(nen)t bien est (sont) choisi(s) parmi l'hexane, l'heptane, et le cyclohexane pris seul ou en mélange entre eux et/ou en mélange avec du pentane.

9. Procédé selon l'une quelconque des revendication 1 à 8, **caractérisé en ce que**, en fin de réaction d'alcoolyse, on réalise une distillation du milieu réactionnel pour en sortir l'alcool non consommé et la phase solvant(s) qui peuvent être aisément recyclés dans une nouvelle réaction d'alcoolyse.

10. Procédé selon la revendication 9, **caractérisé en ce que**, dans le cas du recyclage, on enchaîne les opérations suivantes :
- introduction du distillat à base d'alcool et de solvant(s) issue d'une opération précédente dans le réacteur contenant une nouvelle charge de silane de formule (II), en rajoutant au besoin de l'alcool frais et/ou un complément de phase solvant(s) pour que la concentration en alcool de formule (I) dans l'ensemble alcool de formule (I) + phase solvant(s) organique(s) se situe dans l'intervalle allant de 5 à 30% en poids ;
- puis chauffage du mélange pour porter sa température à la valeur correspondant à sa température d'ébullition dans les conditions de pression présidant à la réalisation du procédé et établissement d'un régime de reflux total stationnaire ;
- puis réalisation ensuite d'une période de reflux sans coulée d'alcool pendant la durée nécessaire à la consommation chimique de l'alcool présent dans le milieu réactionnel ;
- puis réalisation d'une coulée, soit en discontinu soit en continu, de la quantité complémentaire d'alcool qui est nécessaire pour que le rapport molaire alcool total de formule (I) / silane de formule (II) se situe dans l'intervalle allant de 1 à une valeur inférieure à 3 ;
- puis achèvement de la réaction par réalisation d'une seconde période de reflux sans coulée pour atteindre un taux de transformation (TT) du silane de formule (II) au moins égal à 96% (en mole).

11. Procédé pour la préparation des polysulfures de formule générale moyenne (IV): 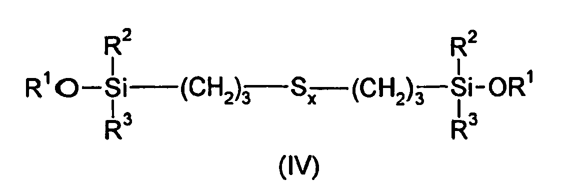 dans laquelle :
- x est un nombre, entier ou fractionnaire, allant de 1,5 ± 0,1 à 5 ± 0,1 ; et
- les symboles R¹, R², R³ sont tels que définis supra,
**caractérisé en ce qu'**il est réalisé en enchaînant les étapes (a), (b) et (c), dans la définition desquelles le groupe amovible A correspond au symbole Hal représentant un atome d'halogène et est un atome de chlore :
+ l'étape (a) correspondant au procédé qui se déroule selon l'équation : 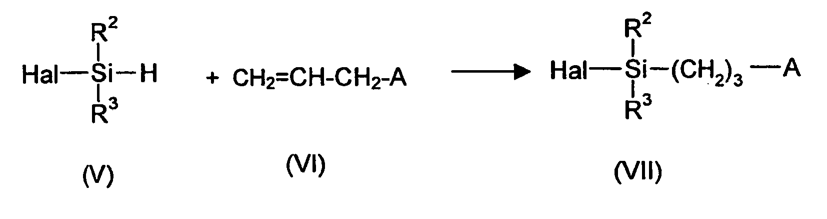 où:
- le symbole Hal représente un atome de chlore, et
- les symboles A, R² et R³ sont tels que définis supra,
la réaction étant réalisée:
- en faisant réagir à une température allant de -10°C à 200°C une mole du diorganohalogénosilane de formule (V) avec une quantité molaire stoechiométrique ou différente de la stoechiométrie du dérivé d'allyle de formule (VI) en opérant, en milieu homogène ou hétérogène, en présence d'un initiateur consistant :
- soit dans un activateur catalytique consistant dans : (i) au moins un catalyseur comprenant au moins un métal de transition ou un dérivé dudit métal, pris dans le groupe formé par Co, Ru, Rh, Pd, Ir et Pt ; et éventuellement (2i) au moins un promoteur ou auxiliaire de réaction d'hydrosilylation,
- soit dans un activateur photochimique, consistant en particulier dans un rayonnement ultraviolet approprié ou dans un rayonnement ionisant approprié,
et éventuellement en isolant le dérivé de diorganohalogénosilylpropyle de formule (VII) formé ;
+ l'étape (b) correspondant au procédé décrit dans l'une quelconque des revendications 1 à 10 précédentes ;
+ et l'étape (c) correspondant au procédé mettant en oeuvre la réaction : 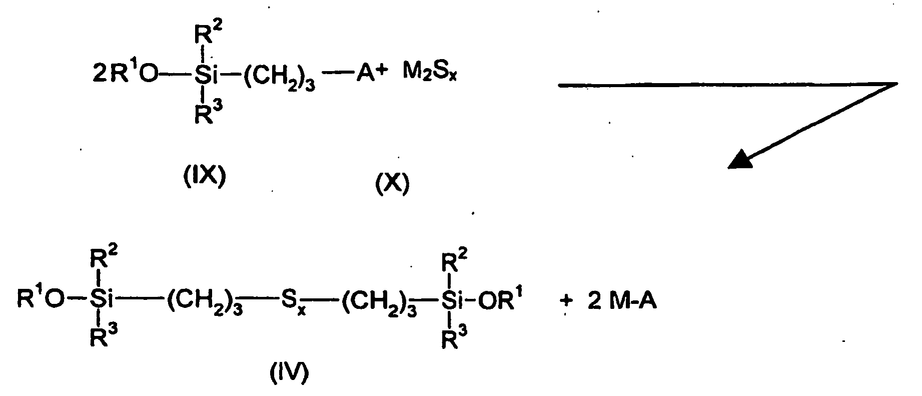
où :
- les symboles R¹, R², R³, A et x sont tels que définis supra, et
- le symbole M représente un métal alcalin,
la réaction étant réalisée :
- en faisant réagir à une température allant de 20°C à 120°C, soit le milieu réactionnel obtenu à l'issue de l'étape (b), soit le dérivé de monoorganoxydiorganosilylpropyle de formule (IX) pris isolément après séparation dudit milieu réactionnel, avec le polysulfure métallique de formule (X) à l'état anhydre, en utilisant 0,5 ± 15% mole de polysulfure métallique de formule (X) par mole du réactif de formule (IX) et en opérant éventuellement en présence d'un solvant organique polaire (ou non polaire) inerte, et
- en isolant le polysulfure de bis-(monoorganoxysilylpropyle) de formuler (IV) formé.

12. Procédé selon la revendication 11, **caractérisé en ce que** l'étape (a) est réalisée en présence d'un activateur comprenant, au titre du (ou des) catalyseur(s) (i), l'une et/ou l'autre des espèces métalliques suivantes : (i-1) au moins un métal de transition élémentaire finement divisé ; et/ou (i-2) un colloïde d'au moins un métal de transition ; et/ou (i-3) un oxyde d'au moins un métal de transition ; et/ou (i-4) un sel dérivé d'au moins un métal de transition et d'un acide minéral de carboxylique ; et/ou (i-5) un complexe d'au moins un métal de transition équipé de ligand(s) organique(s) pouvant posséder un ou plusieurs hétéroatome(s) et/ou de ligand(s) organosilicique(s) ; et/ou (i-6) un sel tel que défini supra où la partie métallique est équipée de ligand(s) tel(s) que défini(s) aussi supra , et/ou (i-7) une espèce métallique choisie parmi les espèces précitées (métal de transition élémentaire, oxyde, sel, complexe, sel complexé) où le métal de transition est associé cette fois à au moins un autre métal choisi dans la famille des éléments des groupes 1b, 2b, 3a, 3b, 4a, 4b, 5a, 5b, 6b, 7b, et 8 (sauf Co, Ru, Rh, Pd, Ir et Pt) de la classification périodique telle que publiée dans "Hanbook of Chemistry and Physics, 65^{éme} édition, 1984-1985, CRC Press, Inc.", ledit autre métal étant pris sous sa forme élémentaire ou sous une forme moléculaire, ladite association pouvant donner naissance à une espèce bi-métallique ou pluri-métallique ; et/ou (i-8) une espèce métallique choisie parmi les espèces précitées (métal de transition élémentaire et association métal de transition - autre métal ; oxyde, sel, complexe et sel complexé sur base métal de transition ou sur base association métal de transition - autre métal) qui est supportée sur un support solide inerte tel que alumine, la silice, le noir de carbone, une argile, l'oxyde de titane, un aluminosilicate, un mélange d'oxydes d'aluminium et de zirconium, une résine polymère.

13. Procédé selon la revendication 11 ou 12, **caractérisé en ce que** l'étape (a) est réalisée en présence d'un activateur comprenant :
+ au titre du (ou des) catalyseur(s) (i), au moins une espèce métallique appartenant des complexes de l'iridium de formule :
[Ir (R⁴)_{y} (R⁵)]_{z} (XI)
dans laquelle :
- le symbole R⁴ représente soit un ligand monodentate L et dans ce cas y = 2, soit un ligand bidentate (L)₂ et dans ce cas y = 1, et
- le symbole R⁵ représente, soit Hal tel que défini supra, et dans ce cas z = 2, soit un ligand de type LX et dans ce cas z = 1 ;
+ et au titre du (ou des) possible(s) auxiliaire(s) (2i), au moins une espèce à l'état libre ou supporté sélectionnée dans le groupe de composés comprenant :
➢ (i) les cétones,
➢ (ii) les éthers,
➢ (iii) les quinones,
➢ (iv) les anhydrides,
➢ (v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHI : étant linéaires ou cycliques (mono ou polycyclique), ayant de 4 à 30 atomes de carbone, ayant de 1 à 8 insaturations éthyléniques et/ou acétyléniques et comportant éventuellement un ou plusieurs hétéroatomes,
> (vi) et leurs mélanges,
avec la condition selon laquelle quand l'auxiliaire comprend un ou plusieurs CHI tels que définis supra, alors ce (ces) CHI est (sont) mélangé(s) avec au moins un autre auxiliaire différent d'un CHI.

14. Procédé selon l'une quelconque des revendications 11 à 13, **caractérisé en ce que** l'étape (c) est réalisée en engageant des polysulfures métalliques de formule (X) anhydres qui sont préparés au préalable à partir d'un sulfure alcalin M₂S sous forme d'un sulfure hydraté, selon un processus qui consiste à enchaîner les phases opératoires (1) et (2) suivantes :
• phase (1), où on procède à une déshydratation du sulfure alcalin hydraté en appliquant la méthode appropriée qui permet d'éliminer l'eau de cristallisation tout en conservant le sulfure alcalin à l'état solide, pendant la durée de la phase de déshydratation ;
• phase (2), où on procède ensuite à la mise en contact d'une mole de sulfure alcalin déshydraté obtenu avec n(x-1) moles de soufre élémentaire, en opérant à une température allant de 20°C à 120°C, éventuellement sous pression et éventuellement encore en présence d'un solvant organique anhydre, le facteur n précité se situant dans l'intervalle allant de 0,8 à 1,2 et le symbole x étant tel que défini supra.

## Claims

1. A method of production of an organoalkoxydialkylsilane of formula:
R¹O-------(R²R³)Si---(CH₂)₃---A (III)
+ which comprises bringing an alcohol of formula:
R¹-OH (I)
into contact with a silane of formula:
Hal---(R²R³)Si-(CH₂)₃---A (II)
in order to carry out the reaction of alcoholysis of said silane according to the following equilibrium reaction: 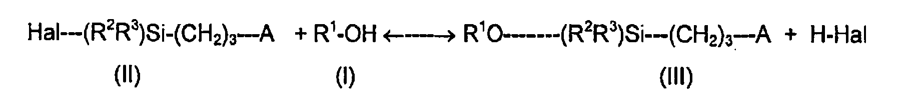 where:
- the symbol Hal represents a halogen atom selected from the chlorine, bromine and iodine atoms,
- the symbols R¹, which may be identical or different, each represent a monovalent hydrocarbon group selected from a linear or branched alkyl radical having from 1 to 15 carbon atoms and a linear or branched alkoxyalkyl radical having from 2 to 8 carbon atoms;
- the symbols R² and R³, which may be identical or different, each represent a monovalent hydrocarbon group selected from a linear or branched alkyl radical having from 1 to 6 carbon atoms and a phenyl radical;
- A represents a detachable group selected from: either a halogen atom Hal among the chlorine, bromine and iodine atoms; or a para-R⁰-C₆H₄-SO₂-O-radical where R⁰ is a linear or branched C₁-C₄ alkyl radical; or an R⁰-SO₂-O- radical where R⁰ is as defined above; or an R⁰-CO-O- radical where R⁰ is as defined above;
+ by working, under a pressure equal to or different from atmospheric pressure, in a stirred reactor equipped with a distillation column and with a condenser with possibility of reflux;
+ by carrying out, on the one hand, the said bringing into contact by pouring the alcohol of formula (I) into a mixture of silane of formula (II) + organic solvent ( s ) phase, it being possible for the solvent(s) phase to be used - partly - if necessary, mixed with the alcohol of formula (I), and on the other hand the removal of the halogenated acid formed of formula H-Hal by entrainment by means of said organic solvent(s) phase, and
+ by recovering the organoalkoxydialkylsilane of formula (III) formed in the reactor by any suitable method known by a person skilled in the art;
said process being **characterized by** the following points:
• the mixture of silane of formula (II) + organic solvent(s) phase is heated to a temperature that corresponds to its boiling point in the pressure conditions prevailing during execution of the process, and introduction of the alcohol begins when the condenser on the reactor is charged and is operating in conditions of steady-state reflux;
• the solvent(s) phase comprises one or more organic solvents selected so as to be able to fulfill a dual function: on the one hand, remove the halogenated acid formed by entrainment and salting-out of the gas owing to very low affinity of said phase for the acid, and on the other hand to provide liquid-vapour equilibrium with the alcohol which provides a concentration of alcohol of formula (I) in the mixture of alcohol of formula (I) + organic solvent(s) phase in the range from 5 to 30 wt.%;
• the manner of introduction of the alcohol of formula (I) follows an operating procedure that is designed to prevent, at any moment during the reaction of alcoholysis of the silane of formula (II), accumulation of the halogenated acid of formula H-Hal in the reactor by dissolution in the alcohol of formula (I), in such a way that the amount of halogenated acid entrained by the solvent(s) phase represents, at any moment during the reaction of alcoholysis of the silane of formula (II), more than 90 wt.% of the halogenated acid formed;
• the total amount of alcohol of formula (I) introduced is such that the molar ratio of alcohol of formula (I) to silane of formula (II) is in the range from 1 to a value below 3;
• the amount of solvent(s) phase present in the reactor along with the silane of formula (II) depends on the nature of this phase and is determined so as to make it possible to limit, during introduction, the concentration of alcohol of formula (I) in the mixture of alcohol of formula (I) + organic solvent (s) phase in the aforesaid range from 5 to 30 wt.%.

2. The method as claimed in claim 1, **characterized in that** the solvent(s) phase comprises solvent(s) whose boiling point, in the conditions of pressure prevailing during execution of the method, is close to that of the alcohol of formula (I).

3. The method as claimed in claim 1 or 2, **characterized in that** the manner of introduction of the alcohol of formula (I) is based on operating procedure VA1, comprising:
- at least two charges of two fractions of alcohol, the first fraction of alcohol corresponding to a proportion representing 60 to 90 mol.% relative to the total molar quantity of alcohol used,
- at least two periods of reflux without charging, each of them subsequent to each alcohol charge effected;
- the flow rate and the charging time of each fraction of alcohol as well as the duration of each period of reflux without charging being controlled in such a way that each fraction of alcohol charged is consumed during the period of reflux without charging that follows said charging.

4. The method as claimed in claim 1 or 2, **characterized in that** the manner of introduction of the alcohol of formula (I) is based on operating procedure VA2, which comprises execution of a single continuous charge of alcohol, but employing a flow rate that decreases with the degree of progress of the reaction of alcoholysis of the silane of formula (II) in such a way that the rate of introduction of the alcohol tracks its rate of consumption, and this single charging stage can be extended by a period of reflux without charging of variable duration.

5. The method as claimed in any one of the claims 1 to 4, **characterized in that** it employs an anhydrous alcohol containing less than 1000 ppm of water and the total quantity of alcohol of formula (I) introduced is such that the molar ratio of alcohol of formula (I) / silane of formula (II) is in the range from 1.05 to 2.5.

6. The method as claimed in any one of the claims 1 to 5, **characterized in that** it employs a quantity of solvent(s) phase that is determined so as to provide a concentration of alcohol of formula (I) in the combination of alcohol of formula (I) + solvent(s) phase that is in the range from 10 to 30 wt.%.

7. The method as claimed in any one of the claims 1 to 6, **characterized in that** the method is carried out with reactants of formulas (I) and (II) where:
- the symbol Hal represents a halogen atom selected from the atoms of chlorine, bromine and iodine;
- the symbols R¹ are selected from the methyl, ethyl, n-propyl, isopropyl, n-butyl, CH₃OCH₂-, CH₃OCH₂CH₂- and CH₃OCH(CH₃)CH₂- radicals;
- the symbols R² and R³ are selected from the radicals: methyl, ethyl, n-propyl, isopropyl, n-butyl, n-hexyl and phenyl.

8. The method as claimed in claims 1, 2 and 7, **characterized in that**, when the method is carried out using an alkanol of formula (I) where R¹ is selected from the methyl, ethyl, n-propyl and isopropyl radicals, the solvent or solvents that is/are very suitable is/are selected from hexane, heptane, and cyclohexane used alone or mixed with one another and/or mixed with pentane.

9. The method as claimed in any one of the claims 1 to 8, **characterized in that**, at the end of the alcoholysis reaction, distillation of the reaction mixture is carried out in order to remove the unconsumed alcohol and the solvent(s) phase which can easily be recycled to a new reaction of alcoholysis.

10. The method as claimed in claim 9, **characterized in that**, in the case of recycling, the following sequence of operations is carried out:
- introduction of the distillate based on alcohol and solvent(s) obtained from a previous operation, into the reactor containing a new charge of silane of formula (II), if necessary adding fresh alcohol and/or additional solvent(s) phase so that the concentration of alcohol of formula (I) in the mixture of alcohol of formula (I) + organic solvent(s) phase is within the range from 5 to 30 wt.%;
- then heating the mixture to raise its temperature to the value corresponding to its boiling point in the conditions of pressure prevailing during execution of the method and establishment of conditions with total steady-state reflux;
- then carrying out a period of reflux without charging of alcohol during the time required for chemical consumption of the alcohol present in the reaction mixture;
- then charging, either in batch mode or continuously, of the extra amount of alcohol required so that the molar ratio of total alcohol of formula (I) to silane of formula (II) is in the range from 1 to a value of less than 3;
- then completion of the reaction by carrying out a second period of reflux without charging to reach a degree of transformation (TT) of the silane of formula (II) equal to at least 96 mol.%.

11. A method of production of the polysulfides of average general formula (IV): 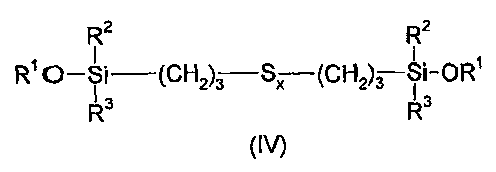 in which:
- x is an integer or a fractional number, in the range from 1.5 ± 0.1 to 5 ± 0.1; and
- the symbols R¹, R² and R³ are as defined above,
**characterized in that** it is carried out as a sequence of stages (a), (b) and (c), in the definition of which the detachable group A corresponds to the symbol Hal representing a halogen atom and is a chlorine atom:
+ stage (a) corresponding to the process taking place according to the equation: 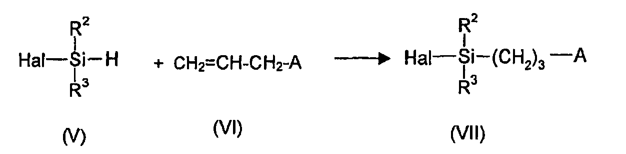 where:
- the symbol Hal represents a chlorine atom, and
- the symbols A, R² and R³ are as defined above,
the reaction being carried out:
- by reacting, at a temperature in the range from -10°C to 200°C, one mole of the diorganohalosilane of formula (V) with a stoichiometric or non-stoichiometric molar quantity of the allyl derivative of formula (VI), working, in a homogeneous or heterogeneous medium, in the presence of an initiator comprising:
- either a catalytic activator comprising: (i) at least one catalyst containing at least one transition metal or a derivative of said metal, taken from the group comprising Co, Ru, Rh, Pd, Ir and Pt; and optionally (2i) at least one hydrosilylation reaction promoter or auxiliary,
- or a photochemical activator, in particular comprising suitable ultraviolet radiation or suitable ionizing radiation,
and optionally isolating the diorganohalosilylpropyl derivative of formula (VII) formed;
+ stage (b) corresponding to the process described in any one of the preceding claims 1 to 10;
+ and stage (c) corresponding to the process employing the reaction: 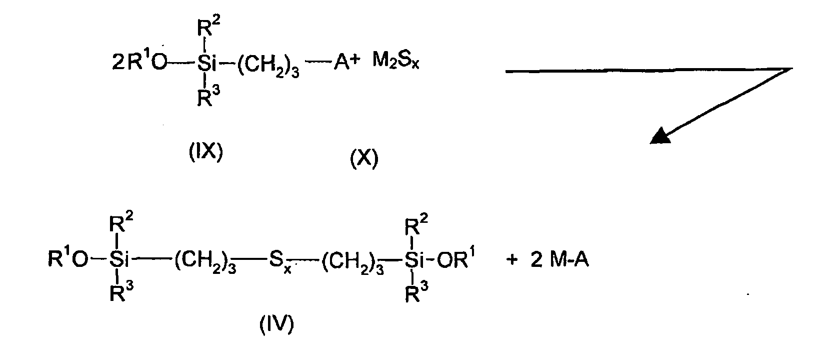
where:
- the symbols R¹, R², R³, A and x are as defined above, and
- the symbol M represents an alkali metal,
the reaction being carried out:
- by reacting, at a temperature in the range from 20°C to 120°C, either the reaction mixture obtained at the end of stage (b), or the monoorganooxydiorganosilylpropyl derivative of formula (IX) used separately after separation from said reaction mixture, with the metal polysulfide of formula (X) in the anhydrous state, using 0.5 ± 15 mol.% of metal polysulfide of formula (X) per mole of reactant of formula (IX) and optionally working in the presence of an inert polar (or nonpolar) organic solvent, and
- isolating the bis-(monoorganooxysilylpropyl) polysulfide of formula (IV) formed.

12. The method as claimed in claim 11, **characterized in that** stage (a) is carried out in the presence of an activator comprising, as the catalyst or catalysts (i), one and/or another of the following metallic species: (i-1) at least one finely-divided elemental transition metal; and/or (i-2) a colloid of at least one transition metal; and/or (i-3) an oxide of at least one transition metal; and/or (i-4) a salt derived from at least one transition metal and an inorganic carboxylic acid; and/or (i-5) a complex of at least one transition metal provided with organic ligand(s) that can possess one or more heteroatom(s) and/or with organosilicon ligand(s); and/or (i-6) a salt as defined above where the metallic part is provided with ligand(s) as also defined above; and/or (i-7) a metallic species selected from the aforementioned species (elemental transition metal, oxide, salt, complex, complexed salt) where the transition metal is associated in this case with at least one other metal selected from the family of the elements of groups 1b, 2b, 3a, 3b, 4a, 4b, 5a, 5b, 6b, 7b, and 8 (except Co, Ru, Rh, Pd, Ir and Pt) of the periodic table as published in the Handbook of Chemistry and Physics, 65th edition, 1984-1985, CRC Press, Inc., said other metal being used in its elemental form or in a molecular form, said association possibly giving rise to a bimetallic or multimetallic species; and/or (i-8) a metallic species selected from the aforementioned species (elemental transition metal and association of transition metal - other metal; oxide, salt, complex and complexed salt based on a transition metal or based on an association of transition metal - other metal) which is supported on an inert solid support such as alumina, silica, carbon black, a clay, titanium dioxide, an aluminosilicate, a mixture of oxides of aluminum and zirconium, a polymeric resin.

13. The method as claimed in claim 11 or 12, **characterized in that** stage (a) is carried out in the presence of an activator comprising:
+ as the catalyst or catalysts (i), at least one metallic species belonging to the iridium complexes of formula:
[Ir (R⁴)_{y} (R⁵)]_{z} (XI)
in which:
- the symbol R⁴ represents either a monodentate ligand L and in this case y = 2, or a bidentate ligand (L)₂ and in this case y = 1, and
- the symbol R⁵ represents either Hal as defined above, and in this case z = 2, or a ligand of type LX and in this case z = 1;
+ and as the possible auxiliary or auxiliaries (2i), at least one species in the free state or supported, selected from the group of compounds comprising:
(i) the ketones,
(ii) the ethers,
(iii) the quinones,
(iv) the anhydrides,
(v) the unsaturated hydrocarbons (UHC) having an aromatic character and/or containing at least one C=C double bond and/or at least one C≡C triple bond, where these unsaturated bonds can be conjugated or unconjugated, said UHCs being linear or cyclic (mono- or polycyclic), having from 4 to 30 carbon atoms, having from 1 to 8 ethylenic and/or acetylenic unsaturations and optionally containing one or more heteroatoms,
(vi) and mixtures thereof,
with the condition that when the auxiliary comprises one or more UHC as defined above, this UHC or these UHCs is/are mixed with at least one other auxiliary different from a UHC.

14. The method as claimed in any one of the claims 11 to 13, **characterized in that** stage (c) is carried out using anhydrous metal polysulfides of formula (X) which are prepared beforehand from an alkali metal sulfide M₂S in the form of a hydrated sulfide, by a process involving a sequence of the following steps (1) and (2):
• step (1), involving dehydration of the hydrated alkali metal sulfide by applying a suitable method by which the water of crystallization can be removed while keeping the alkali metal sulfide in the solid state, throughout the dehydration step;
• step (2), in which one mole of dehydrated alkali metal sulfide obtained is then brought into contact with n(x-1) moles of elemental sulfur, working at a temperature in the range from 20°C to 120°C, optionally under pressure and also optionally in the presence of an anhydrous organic solvent, the aforementioned factor n being in the range from 0.8 to 1.2 and the symbol x being as defined above.

## Patentansprüche

1. Verfahren zur Herstellung eines Organoalkoxydialkylsilans der Formel:
R¹O-------(R²R³)Si---(CH₂)₃---A (III)
+ welches darin besteht, einen Alkohol der Formel:
R¹-OH (I)
mit einem Silan der Formel:
Hal---(R²R³)Si-(CH₂)₃---A (II)
in Kontakt zu bringen, um die Alkoholysereaktion des Silans gemäß der folgenden Gleichgewichtsreaktion durchzuführen: 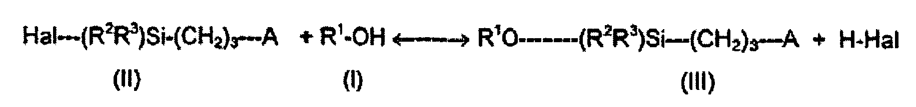 in der:
- das Symbol Hal für ein Halogenatom steht, das aus den Chlor-, Brom- und Jodatomen ausgewählt ist,
- die Symbole R¹, identisch oder verschieden, jeweils für eine monovalente Kohlenwasserstoffgruppe stehen, die ausgewählt ist aus einem Alkylradikal, linear oder verzweigt, mit 1 bis 15 Kohlenstoffatomen, und einem Alkoxyalkylradikal, linear oder verzweigt, mit 2 bis 8 Kohlenstoffatomen;
- die Symbole R² und R³, identisch oder verschieden, für jeweils für eine monovalente Kohlenwasserstoffgruppe stehen, die ausgewählt ist aus einem Alkylradikal, linear oder verzweigt, mit 1 bis 6 Kohlenstoffatomen, und einem Phenylradikal;
- A für eine Abgangsgruppe steht, die ausgewählt wird aus: entweder einem Halogenatom Hal, das zu den Chlor-, Brom- und Jodatomen gehört; oder einem Radikal para-R⁰-C₆H₄-SO₂-O-, in dem R⁰ ein Alkylradikal, linear oder verzweigt, mit C1-C4 ist; oder einem Radikal R⁰-SO₂-O-, in dem R⁰ wie zuvor definiert ist; oder einem Radikal R⁰-CO-O-, in dem R⁰ wie zuvor definiert ist;
+ indem bei einem Druck, der gleich dem oder unterschiedlich zum Atmosphärendruck ist, in einem Rührreaktor vorgegangen wird, der mit einer Destillationssäule überbaut ist und deren Kondensator Rückflussmöglichkeit bietet;
+ indem einerseits das Inkontaktbringen durch Einbringen durch Gießen des Alkohols der Formel (i) in ein Silangemisch der Formel (II) + organische Lösungsmittelphase durchgeführt wird, wobei die Lösungsmittelphase bei Bedarf - teilweise - in Gemisch mit dem Alkohol der Formel (I) gebunden ist, und andererseits das Entfernen der gebildeten halogenierten Säure der Formel H-Hal durch Transport mit Hilfe der organischen Lösungsmittelphase durchgeführt wird, und
+ indem das in dem Reaktor gebildete Organoalkoxydialkylsilan der Formel (III) mittels jeder geeigneten dem Durchschnittsfachmann bekannten Art und Weise gewonnen wird;
wobei das Verfahren durch die folgenden Punkte **gekennzeichnet** ist:
• das Silangemisch der Formel (II) + organische Lösungsmittelphase werden auf eine Temperatur gebracht, die dessen Siedetemperatur unter den Druckbedingungen entspricht, die bei der Durchführung des Verfahrens herrschen, und es wird begonnen, den Alkohol einzubringen, wenn der Kondensator, der dem Reaktor übergelagert ist, gefüllt ist und sich im stationären Rückflussbetrieb befindet;
• die Lösungsmittelphase aus einem oder mehreren organischen Lösungsmittel(n) besteht, das/die so gewählt ist/sind, dass es/sie eine Doppelfunktion erfüllen kann/können: einerseits die gebildete halogenierte Säure durch Transport und Abgabe des Gases aufgrund einer sehr schwachen Affinität der Phase zu der Säure zu entfernen, und andererseits ein Gleichgewicht Flüssigkeit-Dampf mit dem Alkohol aufzuweisen, das eine Konzentration an Alkohol der Formel (I) in der Gesamtheit aus Alkohol der Formel (I) und organische Lösungsmittelphase ermöglicht, die im Bereich von 5 bis 30 Gew.-% liegt;
• die Art des Einbringens des Alkohols der Formel (I) einem bestimmten Vorgehensprotokoll entspricht, um jederzeit während des Fortschreitens der Alkoholysereaktion des Silans der Formel (II) in dem Reaktor eine Akkumulation der halogenierten Säure der Formel H-Hal durch Lösung in dem Alkohol der Formel (I) zu vermeiden, derart, dass die von der Lösungsmittelphase transportierte Menge an halogenierter Säure jederzeit bei Fortschreiten der Alkoholysereaktion des Silans der Formel (II) mehr als 90 Gew.-% der gebildeten halogenierten Säure darstellt;
• die eingebrachte Gesamtmenge an Alkohol der Formel (I) derart ist, dass das Molverhältnis Alkohol der Formel (I) / Silan der Formel (II) im Bereich von 1 bis zu einem Wert unter 3 liegt;
• die in dem Reaktor neben dem Silan der Formel (II) vorhandene Menge der Lösungsmittelphase von der Art dieser Phase abhängt und so bestimmt wird, dass es möglich ist, während des Einbringens die Konzentration an Alkohol der Formel (I) in der Gesamtheit aus Alkohol der Formel (I) + organische Lösungsmittelphase auf den vorgenannten Bereich von 5 bis 30 Gew.-% einzuschränken.

2. Verfahren nach Anspruch 1, **dadurch gekennzeichnet, dass** die Lösungsmittelphase aus Lösungsmittel(n) gebildet ist, dessen/deren Siedetemperatur unter den bei der Durchführung des Verfahrens herrschenden Druckbedingungen nahe der des Alkohols der Formel (I) liegt.

3. Verfahren nach Anspruch 1 oder 2, **dadurch gekennzeichnet, dass** die Art des Einbringens des Alkohols der Formel (I) dem Vorgehensprotokoll VA1 entspricht, das gegliedert ist in
- wenigstens zwei Gießvorgänge von zwei Alkoholfraktionen, wobei die erste Alkoholfraktion einem Anteil entspricht, der 60 bis 90 Mol-% bezogen auf die gesamte Molmenge des verwendeten Alkohols darstellt,
- wenigstens zwei Rückfussperioden ohne Gießvorgang, wobei jede der beiden sich an einen durchgeführten Alkohol-Gießvorgang anschließt
- der Durchsatz und die Dauer des Gießvorgangs für jede Alkoholfraktion sowie die Dauer jeder Rückflussperiode ohne Gießvorgang so geregelt ist, dass jede eingegossene Alkoholfraktion bei dem Rückflusszeitraum ohne Gießvorgang, der sich an den Gießvorgang anschließt, aufgebraucht ist.

4. Verfahren nach Anspruch 1 oder 2, **dadurch gekennzeichnet, dass** die Art des Einbringens des Alkohols der Formel (I) dem Vorgehensprotokoll VA2 entspricht, das darin besteht, einen einzigen kontinuierlichen Gießvorgang des Alkohols durchzuführen, aber indem ein Durchfluss verwendet wird, der mit dem Grad des Fortschreitens der Alkoholysereaktion des Silans der Formel (II) derart abnimmt, dass die Geschwindigkeit des Einbringens des Alkohols der Geschwindigkeit entspricht, in welcher er verbraucht wird, wobei dieser Schritt des einmaligen Gießens durch eine Rückflussperiode ohne Gießvorgang von variabler Dauer verlängert werden kann.

5. Verfahren nach einem der Ansprüche 1 bis 4, **dadurch gekennzeichnet, dass** wasserfreier Alkohol, in dem weniger als 1000 ppm Wasser enthalten sind, verwendet wird und die eingebrachte Gesamtmenge an Alkohol der Formel (I) derart ist, dass das Molverhältnis Alkohol der Formel (I) / Silan der Formel (II) im Bereich von 1,05 bis 2,5 liegt.

6. Verfahren nach einem der Ansprüche 1 bis 5, **dadurch gekennzeichnet, dass** eine Menge der Lösungsmittelphase verwendet wird, die derart bestimmt wird, dass eine Konzentration an Alkohol der Formel (I) in der Gesamtheit aus Alkohol der Formel (I) + Lösungsmittelphase im Bereich von 10 bis 30 Gew.-% ermöglicht wird.

7. Verfahren nach einem der Ansprüche 1 bis 6, **dadurch gekennzeichnet, dass** das Verfahren mit den Reagenzien der Formeln (I) und (II) durchgeführt wird, wobei:
- das Symbol Hal für ein Halogenatom steht, das aus den Chlor-, Brom- und Jodatomen ausgewählt ist;
- die Symbole R¹ ausgewählt sind aus den Radikalen Methyl, Ethyl, n-Propyl, Isopropyl, n-Butyl, CH₃OCH₂-, CH₃OCH₂CH₂- und CH₃OCH(CH₃)CH₂-;
- die Symbole R² und R³ ausgewählt sind aus den Radikalen: Methyl, Ethyl, n-Propyl, Isopropyl, n-Butyl, n-Hexyl und Phenyl.

8. Verfahren nach den Ansprüchen 1, 2, und 7, **dadurch gekennzeichnet, dass**, wenn das Verfahren unter Verwendung eines Alkanols der Formel (I), bei dem R¹ aus den Radikalen Methyl, Ethyl, n-Propyl und Isopropyl ausgewählt ist, durchgeführt wird, das oder die Lösungsmittel, das/die am besten geeignet ist/sind, aus Hexan, Heptan und Cyclohexan, einzeln oder als Gemisch derer und/oder als Gemisch mit Pentan, ausgewählt ist/sind.

9. Verfahren nach einem der Ansprüche 1 bis 8, **dadurch gekennzeichnet, dass** für die Alkoholysereaktion eine Destillation des Reaktionsmediums durchgeführt wird, um daraus den nicht verbrauchten Alkohol und die Lösungsmittelphase abzuziehen, die auf einfache Weise bei einer neuen Alkoholysereaktion wiederverwertet werden können.

10. Verfahren gemäß Anspruch 9, **dadurch gekennzeichnet, dass** im Fall der Wiederverwertung die folgenden Vorgänge ausgeführt werden:
- Einbringen des Destillats auf Basis von Alkohol und des/der Lösungsmittel(s), das aus einem vorausgegangenen Vorgang in dem Reaktor stammt, der eine neue Füllung Silan der Formel (II) enthält, indem nach Bedarf frischer Alkohol und/oder eine Vervollständigung des Lösungsmittelphase hinzugefügt wird, damit die Konzentration an Alkohol der Formel (I) in der Einheit aus Alkohol der Formel (I) und organische Lösungsmittelphase im Bereich von 5 bis 30 Gew.-% liegt;
- dann Erwärmen des Gemischs, um dessen Temperatur auf einen Wert zu bringen, der unter den Druckbedingungen, die bei der Durchführung des Verfahrens herrschen, der Siedetemperatur entspricht, und Errichten eines stationären Betriebs in vollständigem Rückfluss;
- dann anschließende Durchführung einer Rückflussperiode ohne Gießen des Alkohols für die Dauer, die für das chemische Verbrauchen des in dem Reaktionsmedium vorhandenen Alkohols erforderlich ist;
- dann Ausführen eines Gießvorgangs, entweder diskontinuierlich oder kontinuierlich, der ergänzenden Menge an Alkohol, die erforderlich ist, damit das Molverhältnis Gesamtalkohol der Formel (I) / Silan der Formel (II) im Bereich von 1 bis zu einem Wert unter 3 liegt;
- dann Beendigung des Reaktion mittels Durchführung einer zweiten Rückflussperiode ohne Gießvorgang, um einen Umwandlungsgrad (TT) des Silans der Formel (II) von wenigstens 96 % (in Mol) zu erhalten.

11. Verfahren für die Herstellung von Polysulfiden der allgemeinen durchschnittlichen Formel (IV): 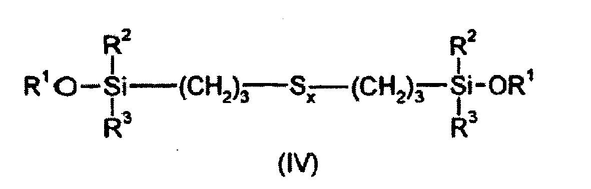 in der:
- x eine ganze Zahl oder eine Bruchzahl im Bereich von 1,5 ± 0,1 bis 5 ± 0,1 ist; und
- die Symbole R¹, R², R³ wie oben definiert sind,
**dadurch gekennzeichnet, dass** es durch Aneinanderreihung der Schritte (a), (b) und (c) durchgeführt wird, wobei in deren Definition die Abgangsgruppe A einem Symbol Hal entspricht, das für ein Halogenatom steht und ein Chloratom ist:
+ der Schritt (a) einem Verfahren entspricht, das gemäß der folgenden Gleichung abläuft: 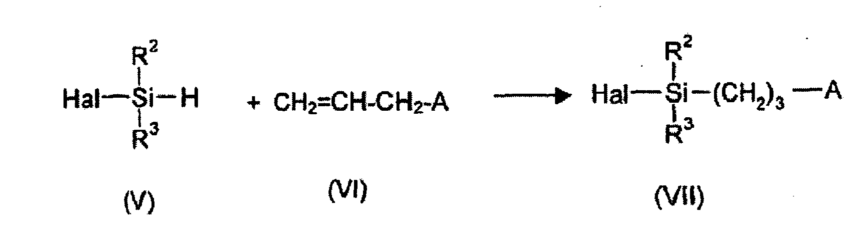 in der:
- das Symbol Hal für ein Chloratom steht, und
- die Symbole A, R² und R³ wie oben definiert sind,
wobei die Reaktion durchgeführt wird:
- indem bei einer Temperatur im Bereich von -10 °C bis 200 °C ein Mol des Diorganohalogenosilans der Formel (V) mit einer stöchiometrischen oder zur Stöchiometrie unterschiedlichen Molmenge des Allylderivats der Formel (VI) reagieren gelassen wird, indem in einem homogenen oder heterogenen Medium in Gegenwart eines Initiators vorgegangen wird, der besteht aus:
- entweder einem katalytischen Aktivator bestehend aus: (i) wenigstens einem Katalysator, der wenigstens ein Übergangsmetall oder ein Derivat des Metalls umfasst, genommen aus der Gruppe gebildet aus Co, Ru, Rh, Pd, Ir und Pt; und gegebenenfalls (2i) wenigstens einem Promotor oder Hilfsstoff für die Hydrosilylierungsreaktion,
- oder einem photochemischen Aktivator, der insbesondere aus einer geeigneten Ultraviolettstrahlung oder aus einer geeigneten ionisierenden Strahlung besteht,
und gegebenenfalls, indem das gebildete Diorganohalogenosilylpropylderivat der Formel (VII) isoliert wird;
+ der Schritt (b) dem in einem der vorausgegangenen Ansprüche 1 bis 10 beschriebenen Verfahren entspricht;
+ und der Schritt (c) dem Verfahren entspricht, für das die folgende Reaktion verwendet wird: 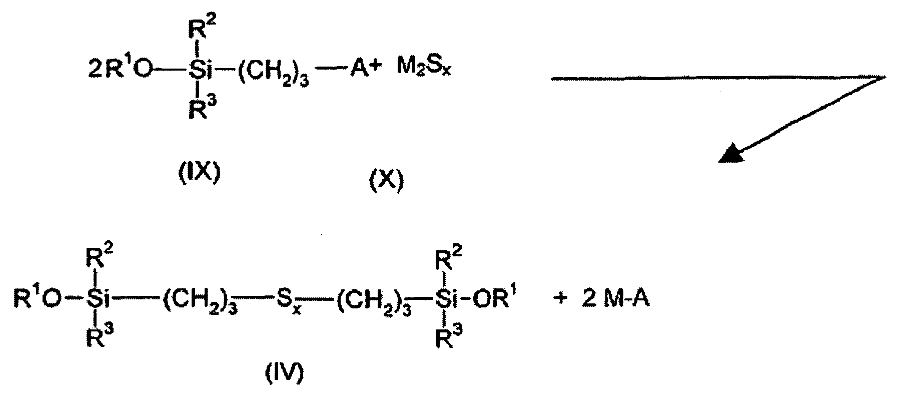
in der:
- die Symbole R¹, R², R³, A und x wie oben definiert sind, und
- das Symbol M für ein Alkalimetall steht,
wobei die Reaktion durchgeführt wird:
- indem bei einer Temperatur im Bereich von 20 °C bis 120 °C entweder das am Ende von Schritt (b) erhaltene Reaktionsmedium oder das Monoorganoxydiorganosilylpropylderivat der Formel (IX) isoliert nach Abtrennung des Reaktionsmediums mit dem Metallpolysulfid der Formel (X) in wasserfreiem Zustand reagieren gelassen wird, indem 0,5 Mol ± 15 % des Metallpolysulfids der Formel (X) pro Mol des Reagenz der Formel (IX) verwendet wird und indem gegebenenfalls in Gegenwart eines inerten polaren (oder nicht polaren) organischen Lösungsmittels vorgegangen wird und
- indem das gebildete bis-(Monoorganoxysilylpropyl)polysulfid der Formel (IV) isoliert wird.

12. Verfahren nach Anspruch 11, **dadurch gekennzeichnet, dass** der Schritt (a) in Gegenwart eines Aktivators durchgeführt wird, der als Katalysator(en) (i) die eine und/oder die andere der folgenden Metallspezies aufweist: (i-1) wenigstens ein fein zerteiltes elementares Übergangsmetall; und/oder (i-2) ein Kolloid wenigstens eines Übergangsmetalls; und/oder (i-3) ein Oxid wenigstens eines Übergangsmetalls; und/oder (i-4) ein Salzderivat von wenigstens einem Übergangsmetall und einer Carboxy-Mineralsäure; und/oder (i-5) einen Komplex aus wenigstens einem Übergangsmetall, das mit einem oder mehreren organischen Liganden ausgestattet ist, der/die ein oder mehrere Heteroatome und/oder einen oder mehrere Organosiliziumliganden aufweisen kann/können; und/oder (i-6) ein Salz wie oben definiert, bei dem der Metallteil mit einem oder mehreren Liganden wie ebenfalls oben definiert ausgestattet ist; und/oder (i-7) eine Metallspezies, die aus den vorgenannten Spezies (elementares Übergangsmetall, Oxid, Salz, Komplex, komplexiertes Salz) ausgewählt ist, wobei das Übergangsmetall dieses Mal mit wenigstens einem anderen Metall ausgewählt aus der Familie der Elemente der Gruppen 1b, 2b, 3a, 3b, 4a, 4b, 5a, 5b, 6b, 7b und 8 (außer Co, Ru, Rh, Pd, Ir und Pt) des Periodensystems der Elemente wie in "Handbook of Chemistry and Physics", 65. Auflage, 1984-1985, CRC Press, Inc., veröffentlicht, assoziiert ist, wobei das andere Metall in seiner elementaren Form oder seiner molekularen Form genommen wird, wobei die Assoziation eine bimetallische oder mehrmetallische Spezies entstehen lassen kann; und/oder (i-8) eine Metallspezies ausgewählt aus den vorgenannten Spezies (elementares Übergangsmetall und Assoziation Übergangsmetall - anderes Metall; Oxid, Salz, Komplex und auf Übergangsmetall-Basis oder Basis aus Assoziation Übergangsmetall - anderes Metall komplexiertes Salz), das auf einem inerten festen Träger, wie beispielsweise Aluminiumoxid, Kieselsäure, Ruß, Argil, Titanoxid, Aluminiumsilicat, einem Gemisch aus Aluminium- und Zirkoniumoxiden, einem Polymerharz, getragen wird.

13. Verfahren gemäß Anspruch 11 oder 12, **dadurch gekennzeichnet, dass** der Schritt (a) in Gegenwart eines Aktivators durchgeführt wird, der umfasst:
+ als Katalysator(en) (i) wenigstens eine Metallspezies, die zu den Iridiumkomplexen der folgenden Formel gehört:
[Ir(R⁴)_{y}(R⁵)]_{z} (XI)
in der:
- das Symbol R⁴ entweder für einen einzähnigen Liganden L steht und in diesem Fall y = 2 ist, oder für einen zweizähnigen Liganden (L)₂ steht und in diesem Fall y = 1 ist, und
- das Symbol R⁵ entweder für Hal wie oben definiert steht, und in diesem Fall Z = 2 ist, oder für einen Liganden der Art LX steht, und in diesem Fall z = 1 ist;
+ und als mögliche(r) Hilfsstoff(e) (2i) wenigstens eine Spezies in freiem oder geträgertem Zustand, ausgewählt aus der Gruppe, welche die folgenden Verbindungen umfasst:
➢ (i) die Ketone,
➢ (ii) die Ether,
➢ (iii) die Chinone,
➢ (iv) die Anhydride,
➢ (v) die ungesättigten Kohlenwasserstoffverbindungen (CHI) mit einem aromatischen Charakter und/oder die wenigstens eine Doppelbindung Kohlenstoff=Kohlenstoff und/oder wenigstens eine Dreifachbindung C•C aufweisen, wobei die ungesättigten Bindungen konjugiert oder nicht konjugiert sein können, wobei die CHI: linear oder cyclisch (mono- oder polycyclisch) sind, mit 4 bis 30 Kohlenstoffatomen, ein- bis achtfach ethylenisch und/oder acetylenisch ungesättigt sind und gegebenenfalls eines oder mehrere Heteroatome aufweisen,
➢ und deren Gemische,
mit der Bedingung, dass, wenn der Hilfsstoff ein oder mehrere CHI wie oben definiert umfasst, der oder die CHI mit wenigstens einem anderen Hilfsstoff unterschiedlich zu einem CHI gemischt ist/sind.

14. Verfahren nach einem der Ansprüche 11 bis 13, **dadurch gekennzeichnet, dass** der Schritt (c) ausgeführt wird, indem die wasserfreien Metallpolysulfide der Formel (X) verwendet werden, die zuvor aus einem Alkalisulfid M₂S in Form eines hydrierten Sulfids gemäß einem Prozess hergestellt wurden, der aus der Aneinanderreihung der folgenden Vorgangsphasen (1) und (2) besteht:
• Phase (1), in der eine Dehydratisierung des hydratisierten Alkalisulfids durchgeführt wird, indem die geeignete Methode angewendet wird, die es ermöglicht, das Kristallisationswasser zu entfernen, wobei gleichzeitig das Alkalisulfid während der Dauer der Dehydratisierungsphase in festem Zustand bleibt ;
• Phase (2), in der anschließend ein Mol des erhaltenen dehydratisierten Alkalisulfids mit n(x-1) Mol elementaren Schwefels in Kontakt gebracht wird, indem bei einer Temperatur im Bereich von 20 °C bis 120 °C vorgegangen wird, gegebenenfalls unter Druck und gegebenenfalls außerdem in Gegenwart eines wasserfreien organischen Lösungsmittels, wobei der vorgenannte Faktor n im Bereich von 0,8 bis 1,2 liegt und das Symbol x wie oben definiert ist.
